(19) Europäisches Patentamt / European Patent Office / Office européen des brevets

(11) **EP 4 642 145 A1**

(12) **EUROPEAN PATENT APPLICATION**
published in accordance with Art. 153(4) EPC

(43) Date of publication:
**29.10.2025 Bulletin 2025/44**

(21) Application number: **24741676.1**

(22) Date of filing: **09.01.2024**

(51) International Patent Classification (IPC):
*H04W 76/12* (2018.01)   *H04B 1/7163* (2011.01)
*H04W 8/00* (2009.01)   *H04L 25/02* (2006.01)
*H04W 4/80* (2018.01)   *H04W 74/08* (2024.01)
*H04W 52/02* (2009.01)   *H04L 69/14* (2022.01)

(52) Cooperative Patent Classification (CPC):
**H04B 1/7163; H04L 25/02; H04L 69/14;
H04W 4/80; H04W 8/00; H04W 52/02; H04W 74/08;
H04W 76/12**

(86) International application number:
**PCT/KR2024/000432**

(87) International publication number:
**WO 2024/151055 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.01.2023 KR 20230003144
23.08.2023 KR 20230110827**

(71) Applicant: **Samsung Electronics Co., Ltd.
Suwon-si, Gyeonggi-do 16677 (KR)**

(72) Inventors:
• **LEE, Mingyu
 Suwon-si, Gyeonggi-do 16677 (KR)**
• **HA, Taeyoung
 Suwon-si, Gyeonggi-do 16677 (KR)**
• **SO, Youngwan
 Suwon-si, Gyeonggi-do 16677 (KR)**

(74) Representative: **HGF
HGF Limited
1 City Walk
Leeds LS11 9DX (GB)**

(54) **METHOD AND DEVICE FOR ULTRAWIDE BAND COMMUNICATION**

(57)   Disclosed is a method for operating a UWB channel together with an NB channel. A method performed by a first UWB device disclosed herein comprises the steps of: generating an NB AP for providing information about a first UWB session used by a first UWB device; and broadcasting the NB AP through the NB channel. The NB AP may be used by a second UWB device to configure a second UWB session.

FIG. 17

## Description

[Technical Field]

The disclosure relates to UWB communication, and more particularly, to a method and device for providing a UWB service through a UWB channel and a narrow band (NB) channel.

[Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

[Detailed Description of the Invention]

[Technical Problem]

The disclosure provides a method for collision avoidance and efficient use in UWB communication.

[Technical Solution]

A method of a first UWB device, according to an aspect of the disclosure, may comprise generating a narrow band NB acquisition packet AP providing information about a first UWB session used by the first UWB device, and broadcasting the NB AP through an NB channel. The NB AP may be used for a second UWB device to establish a second UWB session.

A method of a second UWB device, according to an aspect of the disclosure, may comprise receiving, from a first UWB device through a narrow band NB channel, a narrow band NB acquisition packet AP providing information about a first UWB session used by the first UWB device, and establishing a second UWB session based on the NB AP.

A first UWB device according to an aspect of the disclosure may comprise at least one transceiver and a controller connected to the at least one transceiver. The controller may be configured to generate a narrow band NB acquisition packet AP providing information about a first UWB session used by the first UWB device, and broadcast the NB AP through an NB channel. The NB AP may be used for a second UWB device to establish a second UWB session.

A second UWB device according to an aspect of the disclosure may comprise at least one transceiver, and a controller connected to the at least one transceiver. The controller may be configured to receive, from a first UWB device through a narrow band NB channel, a narrow band NB acquisition packet AP providing information about a first UWB session used by the first UWB device, and establish a second UWB session based on the NB AP.

[Advantageous Effects]

The methods of the disclosure allow for collision avoidance and efficient use in UWB communication.

[Brief Description of Drawings]

FIG. 1A illustrates an example architecture of a UWB device according to an embodiment of the disclosure.
FIG. 1B illustrates a communication system including a UWB device according to an embodiment of the disclosure.

FIG. 2 illustrates a method for performing an NB procedure and a UWB procedure by a UWB device according to an embodiment of the disclosure.

FIG. 3A illustrates an advertising operation according to an embodiment of the disclosure.

FIG. 3B illustrates an advertising operation and a connection setup operation according to an embodiment of the disclosure.

FIG. 4A illustrates a UWB ranging operation according to an embodiment of the disclosure.

FIG. 4B illustrates a UWB ranging operation according to another embodiment of the disclosure.

FIG. 5 illustrates an example of a structure of a ranging block and round used for UWB ranging according to an embodiment of the disclosure.

FIG. 6A illustrates a configuration of a ranging area network according to an embodiment of the disclosure.

FIG. 6B illustrates a method for allocating an NB advertisement channel for a UWB channel according to an embodiment of the disclosure.

FIG. 6C illustrates a method for allocating an NB advertisement channel for a plurality of UWB channels according to an embodiment of the disclosure.

FIG. 6D illustrates a method for allocating an NB advertisement channel for a plurality of UWB channels according to another embodiment of the disclosure.

FIG. 7 illustrates a structure of a channel used in a ranging area network according to an embodiment of the disclosure.

FIG. 8 illustrates a first method for a UWB device to transmit an NB advertisement message in an NB channel according to an embodiment of the disclosure.

FIG. 9 illustrates a second method for a UWB device to transmit an NB advertisement message in an NB channel according to an embodiment of the disclosure.

FIG. 10 illustrates a third method for a UWB device to transmit an NB advertisement message in an NB channel according to an embodiment of the disclosure.

FIG. 11 illustrates a fourth method for a UWB device to transmit an NB advertisement message in an NB channel according to an embodiment of the disclosure.

FIG. 12 illustrates the operation of a UWB device receiving an NB advertisement message in an NB channel according to an embodiment of the disclosure.

FIG. 13 illustrates the operation of a UWB device receiving an NB advertisement message in an NB channel according to another embodiment of the disclosure.

FIG. 14 illustrates operations of a UWB device for NB connection setup according to another embodiment of the disclosure.

FIG. 15 illustrates a configuration of a plurality of ranging area networks (RANs) according to an embodiment of the disclosure.

FIG. 16 illustrates an example of a UWB channel coordination method according to an embodiment of the disclosure.

FIG. 17 illustrates an example of a UWB channel coordination method according to an embodiment of the disclosure.

FIG. 18 illustrates a structure of a first UWB device according to an embodiment of the disclosure.

FIG. 19 illustrates a structure of a second UWB device according to an embodiment of the disclosure.

[Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Ranging device" may be a device capable of performing UWB ranging. In the disclosure, the ranging device may be a ranging device (RDEV) or enhanced ranging device (ERDEV) defined in, e.g., IEEE 802.15.4/4z. In the disclosure, the ranging device may be referred to as a UWB device.

"Advertiser" may be a device (e.g., ranging device) that transmits (or broadcasts) an advertisement message through an advertisement channel.

"Scanner" may be a device (e.g., ranging device) that scans an advertisement channel and receives an advertisement message. In the disclosure, the scanner may also be referred to as an observer.

"Controller" may be a device (e.g., ranging device) that defines and controls ranging control messages (RCM) (or control messages).

"Controlee" may be a device (e.g., ranging device) using a ranging parameter in the RCM (or control message) received from the controller.

"Initiator" may be a device (e.g., ranging device) that initiates a ranging exchange.

"Responder" may be a device (e.g., ranging device) that responds to the Initiator in a ranging exchange.

"In-band" may be data communication that uses UWB as an underlying wireless technology.

"Out-of-band (OOB)" may be data communication that does not use UWB as an underlying wireless technology.

"UWB Session" may be a period from when the controller and the controlee start communication through UWB until the communication stops. In the UWB session, a ranging frame RFRAME may be transferred, a data frame may be transferred, or both a ranging frame and a data frame may be transferred.

"UWB session ID" may be an ID (e.g., a 32-bit integer) that identifies the UWB session, shared between the controller and the controller.

"UWB session key" may be a key used to protect the UWB Session. The UWB session key may be used to generate a scrambled timestamp sequence (STS). In this disclosure, the UWB session key may be a UWB ranging session key (URSK), and may be abbreviated as a session key.

"UWB subsystem (UWBS)" may be a hardware component implementing the UWB PHY and MAC specifications included in the UWB device. In this disclosure, the UWB PHY and MAC specifications may be, e.g., the PHY and MAC specifications defined in, e.g., IEEE 802.15.4/4z. In this disclosure, the UWBS may be referred to as a UWB component.

"UWB-enabled application" may be an application for a service (UWB service). In this disclosure, "UWB-enabled Application" may be abbreviated as an application or a UWB application.

"Service" may be an implementation of a use case that provides a service to an end-user. In this disclosure, the service may be referred to as a UWB service.

"Service data" may be data defined by a service provider that needs to be transferred between two ranging devices to implement a service.

"Service provider" may be an entity that defines and provides hardware and software required to provide a specific service to an end-user.

"STS" may be a ciphered sequence for increasing the integrity and accuracy of ranging measurement timestamps.

Unlike "static STS," "dynamic STS mode" may be an operation mode in which the STS is not repeated during a ranging session. In this mode, the STS may be managed by the ranging device, and the ranging session key for generating STS may be managed by a secure component.

"Static STS mode" is an operation mode in which STS is repeated during a session, and does not need to be managed by the Secure Component.

"Secure channel" may be a data channel that prevents overhearing and tampering.

"Secure component" may be an entity (e.g., secure element (SE) or trusted execution environment (TEE)) having a defined security level that interfaces with UWBS for the purpose of providing RDS to UWBS, e.g., when dynamic STS is used.

"Secure ranging" may be ranging based on STS generated through a strong encryption operation.

"UWB channel" may be one of candidate UWB channels allocated for UWB communication. Candidate UWB channels allocated for UWB communication may be channels allocated for UWB communication defined in IEEE 802.15.4/4z. The UWB channel may be used for UWB ranging and/or transaction. For example, the UWB channel may be used for transmission/reception of a ranging frame RFRAME and/or transmission/reception of a data frame. As an embodiment, one or a plurality of UWB channels may be operated together.

"Narrow band (NB) channel" may be a channel having a narrower bandwidth than the UWB channel. The NB channel may be used to assist UWB communications. The NB channel may be a subchannel of one of the candidate UWB channels allocated for UWB communication or a channel using a specific bandwidth of another available band (e.g., a portion of an industrial, scientific and medical (ISM) band). Candidate UWB channels allocated for UWB communication may be channels allocated for UWB communication defined in IEEE 802.15.4/4z. The NB channel may be used for advertising, device discovery, and/or connection setup for additional parameter negotiation/authentication. For example, the NB channel may be used for transmission and reception of an advertisement message, an additional advertising message, a connection request message, and/or a connection confirmation message. As an embodiment, one or a plurality of NB channels may be operated together.

When determined to make the subject matter of the present invention unnecessarily unclear, the detailed description of related known functions or features may be skipped in describing the disclosure.

Hereinafter, various embodiments of the disclosure are described with reference to the accompanying drawings.

The disclosure proposes a method for collision avoidance and efficient use of a UWB device.

The disclosure provides a method for performing advertising, device discovery, and/or connection setup using in-band, instead of out-of-band, and a structure of a UWB device for the same. Thus, the entire operation for providing the UWB service may be performed through in-band communication. In this case, it is possible to provide a full UWB service for devices without an additional OOB communication module, such as a BLE communication module, other than the UWB communication module.

The disclosure provides a method for operating at least one subchannel among channels allocated for UWB as an NB channel for advertising, device discovery, and/or connection setup. In the disclosure, an NB channel used for advertising, device discovery, and/or connection setup may be distinguished from the channel (UWB channel) used for UWB ranging and/or transaction.

The disclosure provides a method for a UWB device, which is a controller, to transmit information about the UWB communication it uses through an NB channel.

The disclosure provides a method for setting transmission timing and/or transmission offset so as to enable coexistence with existing UWB communications by scanning an advertisement channel (NB channel) before a UWB device, which is a controller, starts UWB communication.

The disclosure provides a method for a UWB device, which is a controlee, to scan an NB channel to obtain the transmission timing of a controller it wishes to participate in before participating in UWB communication.

The disclosure provides a method in which a UWB device, which is a controlee, scans an NB channel to obtain the transmission timing of a controller to be participated in UWB communication before participating in the UWB communication, and then performs additional parameter negotiation and/or authentication through a Sub Advertisement channel (NB channel).

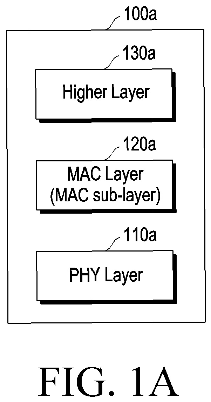

FIG. 1A illustrates an example architecture of a UWB device according to an embodiment of the disclosure.

Referring to FIG. 1A, a UWB device 100a may include at least one PHY layer 110a, a MAC layer (MAC sublayer) 120a and/or a higher layer 130a.

(1) PHY layer

At least one PHY layer 110a may include a transceiver with a low-level control mechanism. In this disclosure, the transceiver may be referred to as an RF transceiver or a radio transceiver.

In an embodiment, the at least one PHY layer 110a may include a first transceiver supporting a UWB channel and a second transceiver supporting an NB channel having a narrower bandwidth than the UWB channel. In this disclosure, the first transceiver may be referred to as a UWB transceiver. The second transceiver may be referred to as an NB transceiver.

In another embodiment, at least one PHY layer 110a may include a transceiver (dual-channel transceiver) that supports both the UWB channel and the NB channel.

In an embodiment, the PHY layer 110a may support at least one of the following functions.

- Transceiver activation and deactivation function (transceiver on/off function)
- Energy detection function
- Channel selection function
- Clear channel assessment (CCA) function
- Synchronization function
- Low-level signaling function
- UWB ranging, positioning and localization functions
- Spectrum resource management function
- Function to transmit/receive packets through physical medium

(2) MAC layer

The MAC layer 120a provides an interface between the upper layer 130a and the PHY layer 120a.

In an embodiment, the MAC layer 120a may provide two services as follows.

- MAC data service: A service that enables transmission and reception of MAC protocol data unit (PDU) through the PHY
- MAC management service: Service interfacing to MAC sublayer management entity (MLME) service access point (SAP) (MLME-SAP)

In an embodiment, the MAC layer 120a may support at least one of the following functions.

- Device discovery and connection setup function
- Channel access function (function of access to physical channel (e.g., NB channel/UWB channel))
- Synchronization function (e.g., synchronization between NB channel and UWB channel)
- Interference mitigation function based on energy detection
- Functions related to narrowband signaling
- Guaranteed timeslot (GTS) management function
- Frame delivery function
- UWB ranging function
- PHY parameter change notification function
- Security function

(3) Upper layer

The upper layer 130a may include a network layer providing functions, such as network configuration and message routing, and/or an application layer providing an intended function of the device.

In an embodiment, the application layer may be a UWB-enabled application layer for providing a UWB service.

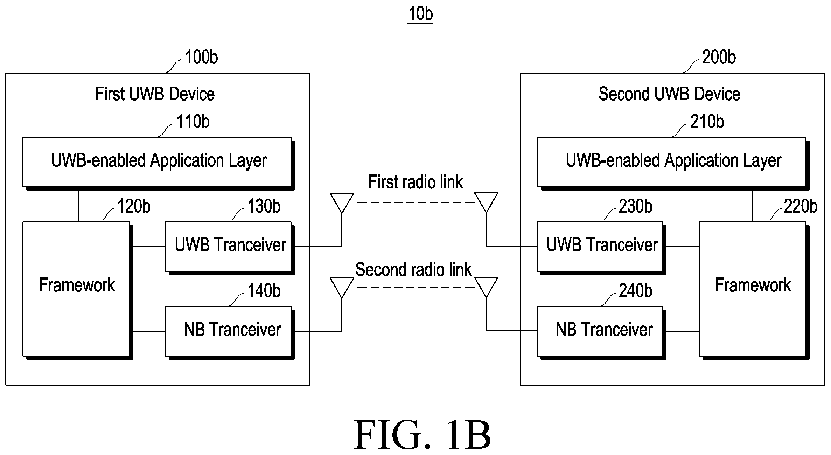

FIG. 1B illustrates a communication system including a UWB device according to an embodiment of the disclosure.

Referring to FIG. 1B, the communication system 10b may include a first UWB device 100b and a second UWB device 200b. The first UWB device 100b and/or the second UWB device 200b of FIG. 1B may be an example of the UWB device 100a of FIG. 1A.

The first UWB device 100b may include a UWB-enabled application layer 110b, a framework 120b, a UWB transceiver 130b, and/or a NB transceiver 140b. The second UWB device 200b may include a UWB-enabled application layer 210b, a framework 220b, a UWB transceiver 230b, and/or an NB transceiver 240b.

In FIG. 1B, the UWB transceiver and the NB transceiver of each device are illustrated as separate components, but the components are divided according to their operations/functions. In other words, the UWB transceiver and the NB transceiver are not limited as implemented as separate physical components (e.g., separate chipsets). Accordingly, the UWB transceiver and the NB transceiver each may be implemented as a separate chipset, or the UWB transceiver and the NB transceiver may be implemented as one integrated chipset.

The UWB-enabled application layers 110b and 210b may be upper application layers for UWB services.

The framework 120b or 220b may be an entity that collectively manages the UWB transceiver 130b or 230b and the NB transceiver 140b or 240b. In an embodiment, the framework 120b or 220b may support a function to control UWB/NB communication (e.g., medium access control (MAC) or UWB/NB transceiver synchronization function) and/or a function for communicating obtained information to a higher application layer 110b or 210b.

The UWB transceiver 130b or 230b may support at least one of candidate UWB channels allocated for UWB communication. In other words, the UWB transceiver 130b or 230b may support at least one UWB channel. Example candidate UWB channels allocated for UWB communication may be shown in Table 0 below.

[Table 0]

| Band group[a] (decimal) | Channel number (decimal) | Center frequency, $f_c$ (MHz) | Band width (MHz) | Mandatory/Optional |
|---|---|---|---|---|
| 0 | 0 | 499.2 | 499.2 | Mandatory below 1 GHz |
| 1 | 1 | 3494.4 | 499.2 | Optional |
| | 2 | 3993.6 | 499.2 | Optional |
| | 3 | 4492.8 | 499.2 | Mandatory in low band |
| | 4 | 3993.6 | 1331.2 | Optional |
| 2 | 5 | 6489.6 | 499.2 | Optional |
| | 6 | 6988.8 | 499.2 | Optional |
| | 7 | 6489.6 | 1081.6 | Optional |
| | 8 | 7488.0 | 499.2 | Optional |
| | 9 | 7987.2 | 499.2 | Mandatory in high band |
| | 10 | 8486.4 | 499.2 | Optional |
| | 11 | 7987.2 | 1331.2 | Optional |
| | 12 | 8985.6 | 499.2 | Optional |
| | 13 | 9484.8 | 499.2 | Optional |
| | 14 | 9984.0 | 499.2 | Optional |
| | 15 | 9484.8 | 1354.97 | Optional |

[a] Note that bands indicate a sequence of adjacent HRP UWB center frequencies: band 0 is the sub-gigahertz channel, band 1 has the low-band HRP UWB channels, and band 2 has the high-band channels.

In an embodiment, at least one of the channels in Table 0 may be assigned as a UWB channel supported by the UWB transceiver 130b or 230b. For example, channel number 5 and/or 9 of Table 0 may be allocated as a UWB channel.

At least one UWB channel supported by the UWB transceiver 130b or 230b or the UWB transceiver 130b or 230b may be used for UWB ranging and/or transaction. For example, at least one UWB channel supported by the UWB transceiver 130b or 230b or the UWB transceiver 130b or 230b may be used for transmitting/receiving a ranging frame RFRAME and/or a data frame.

The NB transceiver 140b or 240b may support at least one NB channel having a narrower bandwidth (e.g., 50 MHz or less) than a UWB channel. At least one NB channel supported by the NB transceiver 140b or 240b or the NB transceiver 140b or 240b may be used for advertisement (discovery) and/or narrowband signaling.

In an embodiment, the NB channel may be a subchannel of one of the candidate UWB channels allocated for UWB communication. Example candidate UWB channels allocated for UWB communication may be shown in Table 0 above.

In another embodiment, the NB channel may be a channel using a specific bandwidth of another available band (e.g., some of industrial, scientific and medical (ISM) bands).

As an embodiment, the NB channel may be used for in-band communication, like the UWB channel.

Meanwhile, as in Table 0 above, the candidate UWB channels mainly have a bandwidth of 500 MHz or more. Therefore, when it is used as it is for advertisement (discovery), it is disadvantageous in power spectral density (energy detection), so it is needed to divide the corresponding channel into a plurality of subchannels for advertisement (discovery).

For example, at least one of the subchannels into which one of the channels of Table 0 is divided or at least one of channels using a specific bandwidth of an available band (e.g., part of the industrial, scientific, and medical (ISM) band) may be allocated as a channel for advertisement (advertisement channel). In an embodiment, the Advertisement channel may be used to transfer the advertisement message. In the disclosure, the advertisement channel may be referred to as a first subchannel, an NB advertisement channel, or a discovery channel, and the advertisement message may be referred to as a first advertisement message or an NB advertisement message.

Further, at least one of the remaining subchannel(s) or channel(s) not allocated as the advertisement channel may be allocated as a channel for connection setup (connection setup channel). In the disclosure, the channel for connection setup may be referred to as a second subchannel, an NB connection setup channel, or a sub advertisement channel. Meanwhile, in the disclosure, the advertisement channel and the connection setup channel may be collectively referred to as an NB channel.

In an embodiment, the connection setup channel may be used for transferring an additional advertisement message including additional advertising information not transmitted through the advertisement channel, for additional parameter negotiation, or for authentication. In this disclosure, the additional advertisement message may be referred to as a second advertisement message or an additional NB advertisement message.

As described above, the NB channel has a narrower bandwidth than the UWB channel.

In an embodiment, the first UWB device 100b and the second UWB device 200b may perform a UWB communication (procedure) (in-band communication) through a first radio link (UWB channel) established through the UWB transceiver 110b of the first UWB device 100b and the UWB transceiver 210b of the second UWB device 200b.

In an embodiment, the first UWB device 100b and the second UWB device 200b may perform an NB communication (procedure) (in-band communication) through a second radio link (NB channel) established through the NB transceiver 110b of the first UWB device 100b and the NB transceiver 210b of the second UWB device 200b.

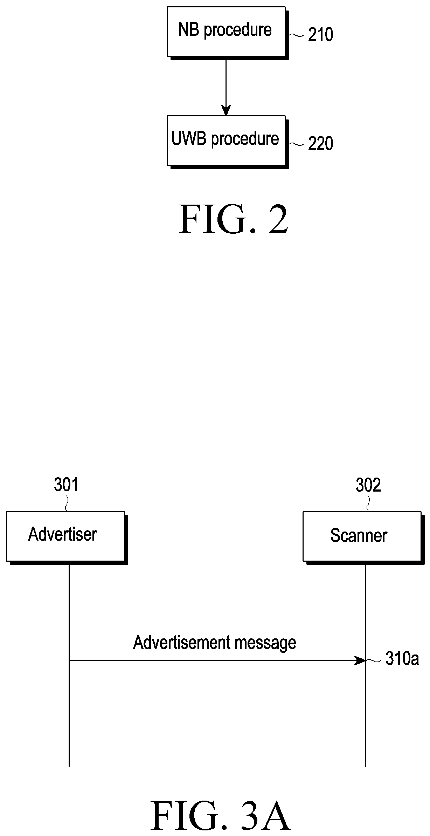

Hereinafter, a method in which the UWB device performs NB communication (procedure) and UWB communication (procedure) is described with reference to FIG. 2.

FIG. 2 illustrates a method for performing an NB procedure and a UWB procedure by a UWB device according to an embodiment of the disclosure.

The UWB device of FIG. 2 may be, e.g., the UWB device of FIG. 1A or 1B.

Referring to FIG. 2, the UWB device may perform the NB procedure 210 and the UWB procedure 220. The NB procedure 210 and UWB procedure 220 may be managed or controlled by the MAC layer (entity) of the UWB device.

(1) NB procedure (step)

In the disclosure, the NB procedure 210 means a procedure performed using at least one NB channel. The NB procedure 210 may be performed before the UWB procedure 220.

The NB procedure 210 may include at least one of the following operations.

- An operation in which the UWB device transmits and/or receives an advertisement message through at least one NB advertisement channel (advertising operation)
- An operation in which the UWB device transmits and/or receives an additional NB advertisement message, a connection request message, and/or a connection confirmation message through at least one connection setup channel (first connection setup operation)

(2) UWB procedure (step)

In the disclosure, the UWB procedure 220 means a procedure performed using at least one UWB channel.

The UWB procedure 220 may include at least one of the following operations.

- An operation in which a UWB device performs UWB ranging with another UWB device (UWB ranging operation)
- An operation in which a UWB device exchanges service data with another UWB device (transaction operation)

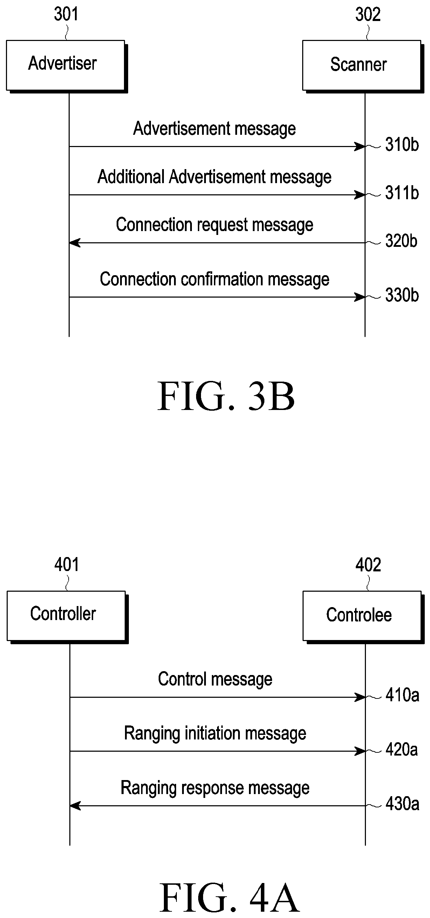

Embodiments of an NB procedure are described below with reference to FIG. 3.

FIG. 3A illustrates an advertising operation according to an embodiment of the disclosure.

The advertising operation of FIG. 3A may be an example of the advertising operation of the NB procedure 210 of FIG. 2.

The advertising operation of FIG. 3A may be an advertising operation performed through the NB advertisement channel.

Referring to FIG. 3A, in operation 310a, the advertiser 301 may transmit an advertisement message. In an embodiment, the advertiser 301 may broadcast an NB advertisement message through at least one NB advertisement channel. In this case, the scanner 302 may scan at least one NB advertisement channel to receive an NB advertisement message. Thus, the scanner 302 may obtain device discovery and/or advertising information.

In an embodiment, the advertiser 301 may be a UWB device that acts as both an advertiser and a controller.

In an embodiment, the NB advertisement channel may be a channel that the advertiser 301 and the scanner 302 know in advance. For example, the NB advertisement channel may be included in the information provided when installing the related UWB-enabled application, be a hard-coded default channel, or be a channel shared between the advertiser 301 and the scanner 302 in other various manners. As described above, the NB advertisement channel may be one subchannel(s) among the candidate UWB channels.

In an embodiment, the NB advertisement message may include at least one of information about the start time of the ranging round, information about the channel occupancy time (e.g., information about the channel occupancy time represented as a multiple of time unit (TU)), information about the length of the ranging block, information about the ranging round, or information about the number of active rounds or active round number. Here, the active round may be a ranging round that is actually used (or occupied) among the ranging rounds.

In an embodiment, the NB advertisement message may include information about the session ID of the session (e.g., ranging session) (session ID information) and/or information (address information) about the address (e.g., the MAC address of the UWB device) of the UWB device transmitting the NB advertisement message. In an embodiment, the NB advertisement message may include numbering information for indicating which number of active round among all the active rounds in the corresponding ranging block the NB advertisement message corresponds to.

In an embodiment, the NB advertisement message may include information (transmission time information) about the transmission time of the subsequent corresponding NB advertisement message. For example, the NB advertisement message or transmission time information may include what number of slot the corresponding NB advertisement message starts to be transmitted (transmission slot indication information) and/or information about the length of the slot (slot length information).

In an embodiment, the NB advertisement message may include information about the period of the ranging block in which the NB advertisement message is transmitted. For example, the NB advertisement message or information about the period of the ranging block may include information (first information) about how many ranging blocks have been skipped or information (second information) about the number of consecutive ranging blocks where an NB advertisement message is not transmitted.

In an embodiment, the NB advertisement message may include the whole or part of the information included in the MAC payload of Table 1 or Table 2.

When the advertising information obtained through the operation of FIG. 3A includes all information necessary to perform UWB communication (UWB procedure), the scanner 302 may perform the above-described operations of FIG. 3A and then immediately perform a UWB procedure.

However, depending on an embodiment, the advertising information may include only a part of information necessary to perform the UWB procedure. In other words, additional advertising information may be further required to perform UWB communication. Alternatively, additional parameter negotiation or authentication may be further required to perform UWB communication. In this case, an additional advertising operation and/or connection setup operation for advertising information acquisition, additional parameter negotiation and/or authentication may further be performed. This is described below with reference to FIG. 3B.

FIG. 3B illustrates an advertising operation and a connection setup operation according to an embodiment of the disclosure.

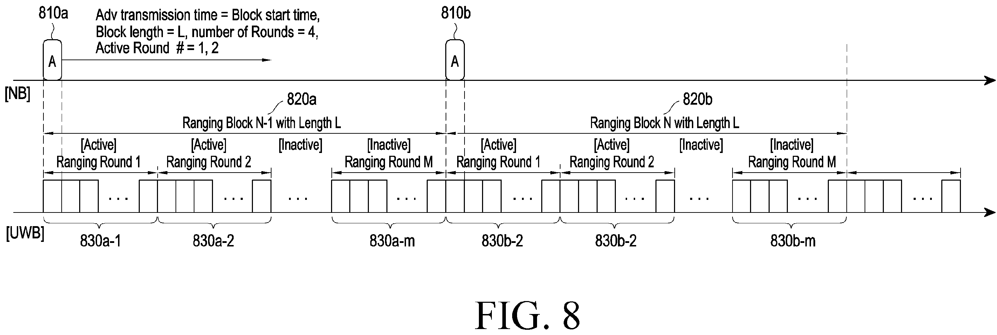

The advertising operation and the connection setup operation of FIG. 8B may be an example of the advertising operation and the connection setup operation of the NB procedure of FIG. 3B.

The advertising operation of FIG. 3b may be an advertising operation performed through at least one NB advertisement channel, and the connection setup operation may be a connection setup operation performed through at least one NB connection setup channel.

Referring to FIG. 3B, in operation 310b, the advertiser 301 may transmit an advertisement message. For example, the advertiser 301 may broadcast an NB advertisement message through at least one NB advertisement channel. In this case, the scanner 302 may scan at least one NB advertisement channel to receive an NB advertisement message. Thus, the scanner 302 may obtain device discovery and/or advertising information.

In an embodiment, the advertiser 301 may be a UWB device that acts as both an advertiser and a controller.

As described above, the NB advertisement channel may be a channel that the advertiser 301 and the scanner 302 know in advance. Further, the NB advertisement channel may be one subchannel(s) among the candidate UWB channels.

Further, when additional advertising information is further required, the following operation 311b may be further performed. Operation 311b may be an optional operation.

In operation 311b, the advertiser 301 may transmit an additional advertisement message. For example, the advertiser 301 may broadcast an additional NB advertisement message through the NB connection setup channel. In this case, the scanner 302 may scan the NB connection setup channel to receive the additional NB advertisement message. In an embodiment, information about the NB connection setup channel may be included in the advertisement message of operation 310b.

Through the additional advertising operation of operation 311b, the scanner 302 may further obtain additional advertising information.

Further, when additional parameter negotiation and/or authentication (connection setup) is required, the following operations 320b and 330b may be further performed. Operations 320b and 330b may be optional operations.

In operation 320b, the scanner 302 may transmit a connection request message to the advertiser. For example, the scanner 302 may transmit a connection request message to the advertiser through the NB connection setup channel. In an embodiment, the connection request message may include parameter(s) for the performance of the controlee and/or information for authentication.

In operation 330b, the advertiser 301 may transmit a connection confirmation message to the scanner in response to the connection request message. For example, the advertiser 301 may transmit a connection confirmation message to the scanner through the NB connection setup channel. In an embodiment, the connection confirmation message may include parameter(s) for UWB setup, parameter(s) for a session key for protecting the UWB session, and/or information for authentication.

Through the connection setup operations of operations 320b and 330b, negotiation and/or authentication of additional parameters may be performed.

Meanwhile, the message exchange operations of operations 320b and 330b may be repeatedly performed as many times as necessary. For example, if additional message exchange is required (i.e., if message exchange is required for additional parameter negotiation and/or authentication) after performing message exchange of operations 320b and 330b once, the message exchange operations of operations 320b and 330b may be further performed as many as necessary on the corresponding NB connection setup channel (sub advertisement channel).

As compared to the embodiment of FIG. 3(a), the embodiment of FIG. 3(b) may reduce the congestion of the NB advertisement channel (discovery channel) and enables efficient operation of a plurality of NB channels. Meanwhile, as compared with the embodiment of FIG. 3(b), the embodiment of FIG. 3(a) may perform a faster NB procedure, thereby shortening the entire time for providing the UWB service. Therefore, it is necessary to flexibly set an appropriate NB procedure and NB channel operation scheme considering the number of UWB devices participating in UWB ranging, the surrounding environment, and the like.

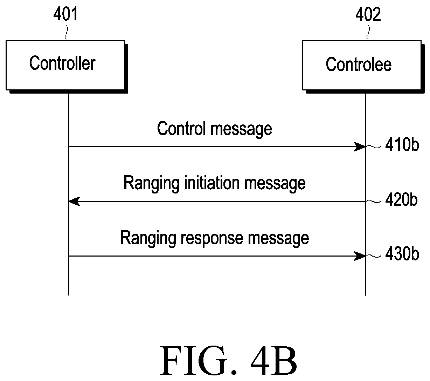

Hereinafter, embodiments of the UWB ranging operation of the UWB procedure are described with reference to FIG. 4.

FIG. 4A illustrates a UWB ranging operation according to an embodiment of the disclosure.

The UWB ranging operation of FIG. 4A may be an example of the UWB ranging operation of the UWB procedure of FIG. 2. The UWB ranging operation of FIG. 4A may be performed through a UWB channel.

In the embodiment of FIG. 4A, UWB ranging may be, e.g., single-sided two-way ranging (SS-TWR) or double-sided two-way ranging (DS-TWR).

In the embodiment of FIG. 4A, it is assumed that the controller 401 serves as an initiator, and the controlee 402 serves as a responder.

Referring to operation 410a, the controller 401 may transmit a control message (ranging control message) for controlling UWB ranging to the controlee 402. For example, the controller 401 may transmit a control message to the controlee 402 through a UWB channel.

In an embodiment, the control message may include information about the role (e.g., initiator or responder) of the UWB device, ranging slot index information, and/or address information about the UWB device.

Referring to operation 420a, the controller (initiator) 401 may transmit a ranging initiation message for starting the ranging exchange to the controlee (responder) 402. For example, the controller (initiator) 401 may transmit a ranging initiation message to the controlee (responder) 402 through the UWB channel.

Referring to operation 430a, the controlee (responder) 402 may transmit a ranging response message corresponding to the ranging initiation message to the controller (initiator) 401. For example, the controlee (responder) 402 may transmit a ranging response message to the controller (initiator) 403 through the UWB channel.

In an embodiment, the ranging response message may further include first measurement report information. The first measurement report message may include, e.g., an AoA measurement, a reply time measured by the responder and/or a list of round-trip time measurements for responders and responder addresses. The reply time may indicate a time difference between the reception time of the ranging initiation message and the transmission time of the ranging reply message at the responder side. Based on this, single-sided two-way ranging (SS-TWR) may be performed. Calculation of time-of- flight (ToF) and distance/direction/position through SS-TWR follows the scheme defined in IEEE 802.15.4z.

Meanwhile, in the case of the DS-TWR, the controller (initiator) 401 may further transmit a ranging response message for completing ranging to the controlee (responder) 402. For example, the controller (initiator) 401 may further transmit the ranging final message to the controlee (responder) 402 through the UWB channel.

In an embodiment, the ranging final message may further include second measurement report (measurement report) information. The second measurement report information may include an AoA measurement, the round-trip time for the first responder (first round-trip time) and/or a list of reply time measurements for responders and responder addresses. The first round-trip time may indicate a time difference between the ranging reply message from the responder and the ranging final message from the initiator. Based on this, single-sided two-way ranging (DS-TWR) may be performed. Calculation of time-of-flight (ToF) and distance/direction/position through DS-TWR follows the scheme defined in IEEE 802.15.4z.

FIG. 4B illustrates a UWB ranging operation according to another embodiment of the disclosure.

The UWB ranging operation of FIG. 4B may be an example of the UWB ranging operation of the UWB procedure of FIG. 2. The UWB ranging operation of FIG. 4B may be performed through a UWB channel.

In the embodiment of FIG. 4B, UWB ranging may be, e.g., single-sided two-way ranging (SS-TWR) or double-sided two-way ranging (DS-TWR).

In the embodiment of FIG. 4B, unlike the embodiment of FIG. 4A, it is assumed that the controller 401 serves as a responder, and the controlee 402 serves as an initiator.

Referring to operation 410b, the controller 401 may transmit a control message (ranging control message) for controlling UWB ranging to the controlee 402. For example, the controller 401 may transmit a control message to the controlee 402 through a UWB channel.

In an embodiment, the control message may include information about the role (e.g., initiator or responder) of the UWB device, ranging slot index information, and/or address information about the UWB device.

Referring to operation 420b, the controlee (initiator) 402 may transmit a ranging initiation message for starting the ranging exchange to the controller (responder) 401. For example, the controlee (initiator) 402 may transmit a ranging initiation message to the controller (responder) 401 through the UWB channel.

Referring to operation 430b, the controller (responder) 401 may transmit a ranging response message corresponding to the ranging initiation message to the controlee (initiator) 402. For example, the controller (responder) 401 may transmit a ranging response message to the controlee (initiator) 402 through the UWB channel.

In an embodiment, the ranging response message may further include first measurement report information. The first measurement report message may include, e.g., an AoA measurement, a reply time measured by the responder and/or a list of round-trip time measurements for responders and responder addresses. The reply time may indicate a time difference between the reception time of the ranging initiation message and the transmission time of the ranging reply message at the responder side. Based on this, single-sided two-way ranging (SS-TWR) may be performed. Calculation of time-of- flight (ToF) and distance/direction/position through SS-TWR follows the scheme defined in IEEE 802.15.4z.

Meanwhile, in the case of the DS-TWR, the controlee (initiator) 402 may further transmit a ranging response message for completing ranging to the controller (responder) 401. For example, the controlee (initiator) 402 may further transmit the ranging final message to the controller (responder) 401 through the UWB channel.

In an embodiment, the ranging final message may further include second measurement report (measurement report) information. The second measurement report information may include an AoA measurement, the round-trip time for the first responder (first round-trip time) and/or a list of reply time measurements for responders and responder addresses. The first round-trip time may indicate a time difference between the ranging reply message from the responder and the ranging final message from the initiator. Based on this, single-sided two-way ranging (DS-TWR) may be performed. Calculation of time-of-flight (ToF) and distance/direction/position through DS-TWR follows the scheme defined in IEEE 802.15.4z.

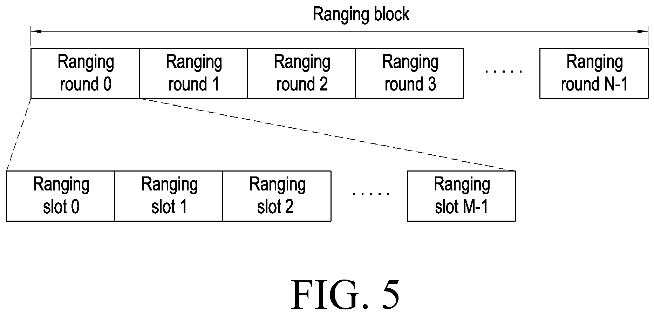

FIG. 5 illustrates an example of a structure of a ranging block and round used for UWB ranging according to an embodiment of the disclosure.

In this disclosure, the ranging block refers to a time period for ranging. The ranging round may be a period of sufficient duration to complete one entire range-measurement cycle in which a set of UWB devices participating in a ranging exchange involves. The ranging slot may be a sufficient period for transmission of at least one ranging frame (RFRAME) (e.g., ranging initiation/reply/final message, etc.).

As shown in FIG. 5, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds. This may be configured through a control message from the controller.

In the disclosure, ranging round may be abbreviated as a round, ranging block as a block, and ranging slot as a slot.

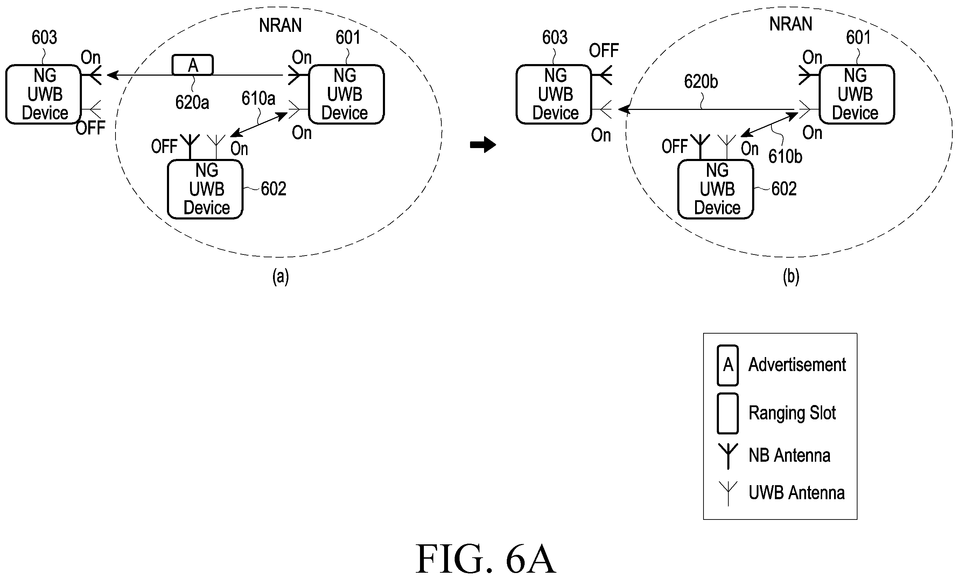

FIG. 6A illustrates a configuration of a ranging area network according to an embodiment of the disclosure.

In the disclosure, a ranging area network (RAN) may be a network including an area in which UWB devices perform UWB ranging. In the disclosure, the ranging area network may be referred to as a new generation (NG) ranging area network (NRAN), and the UWB device may be referred to as an NG UWB device.

In the embodiment of FIG. 6A, it is assumed that the first UWB device 601 of the NRAN serves as a controller and an advertiser. In the NRAN of the embodiment of FIG. 6A, the first UWB device 601 may perform an NB procedure. The first UWB device 601 may perform a UWB procedure with the second UWB device 602 through a UWB session previously established by the first UWB device 601. Each procedure is described below.

(1) NB procedure

Referring to FIG. 6A(a), in operation 610a, the first UWB device 601 may perform a UWB ranging operation with the second UWB device 602 through a previously established UWB session. In an embodiment, the first UWB device 601 and the second UWB device 602 may perform a UWB ranging operation through their respective UWB antennas. Each device's UWB antenna may be connected to each device's UWB transceiver, and the UWB transceiver may support at least one UWB channel.

In operation 620a, the first UWB device 601 may transmit an advertisement message, and the third UWB device 603 may receive the advertisement message. In an embodiment, the first UWB device 601 may broadcast the NB advertisement message through the NB antenna of the first UWB device 601, and the third UWB device 603 may receive the NB advertisement message through the NB antenna of the third UWB device 603. Each device's NB antenna may be connected to each device's NB transceiver, and the NB transceiver may support at least one NB channel.

In the embodiment of FIG. 6A(a), the first UWB device 601 keeps the NB transceiver (or NB antenna) in the active state (on) for transmission of the advertisement message and keeps the UWB transceiver (or UWB antenna) in the active state (on) to perform UWB ranging. Further, the second UWB device 602 keeps the UWB transceiver (or UWB antenna) in the active state (on) to perform UWB ranging but, since reception of the advertising message is unnecessary, may keep the NB transceiver (or NB antenna) in the inactive state (off). Further, the third UWB device 603 keeps the NB transceiver (or NB antenna) in the active state (on) to receive the advertisement message but, since UWB ranging has not been performed yet, may keep the UWB transceiver (or UWB antenna) in the inactive state (off).

As such, the UWB transceiver (or UWB antenna) and/or NB transceiver (or NB antenna) may be turned on/off depending on the context, thereby saving power consumption.

(2) UWB procedure

Referring to FIG. 6A(b), in operation 610b, the first UWB device 601 may perform a UWB ranging operation with the second UWB device 602 through a previously established UWB session. In an embodiment, the first UWB device 601 and the second UWB device 602 may perform a UWB ranging operation through their respective UWB antennas. As described above, each device's UWB antenna may be connected to each device's UWB transceiver, and the UWB transceiver may support at least one UWB channel.

In operation 620b, the first UWB device 601 may perform a UWB ranging operation with the third UWB device 603. In an embodiment, when the third UWB device 603 obtains information necessary to participate in UWB ranging (UWB procedure) with the first UWB device 601 through operation 620a, the third UWB device 603 may perform UWB ranging with the first UWB device 601. To this end, the third UWB device 603 may switch the UWB transceiver (or UWB antenna) of the third UWB device 603 to the active state (on). Thereafter, the third UWB device 602 may receive a ranging control message from the first UWB device 601 through the UWB antenna and may perform a UWB ranging operation based on the ranging control message. As described above, the UWB antenna may be connected to the UWB transceiver, and the UWB transceiver may support at least one UWB channel.

Meanwhile, when the third UWB device 603 performs UWB ranging with the first UWB device 601, the third UWB device 603 may switch the NB transceiver (or NB antenna) of the third UWB device 603 to the inactive state (off) to save power consumption.

In the embodiment of FIG. 6A(b), the first UWB device 601 keeps the NB transceiver (or NB antenna) in the active state (on) for transmission of the advertisement message and keeps the UWB transceiver (or UWB antenna) in the active state (on) to perform UWB ranging. Further, the second UWB device 602 keeps the UWB transceiver (or UWB antenna) in the active state (on) to perform UWB ranging but, since reception of the advertising message is unnecessary, may keep the NB transceiver (or NB antenna) in the inactive state (off). Further, the third UWB device 603 keeps the UWB transceiver (or UWB antenna) in the active state (on) to perform UWB ranging but, since reception of the advertising message is unnecessary, may keep the NB transceiver (or NB antenna) in the inactive state (off).

As such, the UWB transceiver (or UWB antenna) and/or NB transceiver (or NB antenna) may be turned on/off depending on the context, thereby saving power consumption.

Meanwhile, in the embodiment of FIG. 6A, it is assumed that the third UWB device 603 functions as a scanner and a controlee, but embodiments of the disclosure are not limited thereto. The third UWB device 603 may serve as a scanner and a controller. In this case, the third UWB device 603 may perform UWB ranging by establishing its own UWB session without participating in the UWB session controlled by another device.

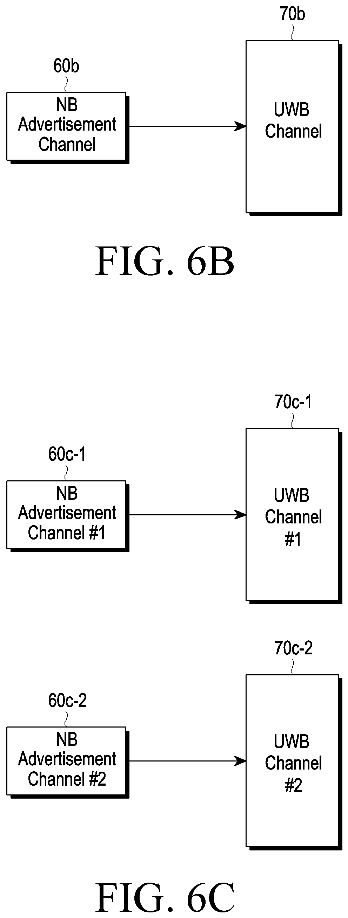

FIG. 6B illustrates a method for allocating an NB advertisement channel for a UWB channel according to an embodiment of the disclosure.

In the embodiment of FIG. 6b, it is assumed that one UWB channel is used.

Referring to FIG. 6B, an NB advertisement channel 60b may be allocated to a UWB channel 70b to be used.

As an example, the UWB channel 70b may be one of the candidate UWB channels (e.g., channel 5 or 9) of Table 0, and the NB channel 60b may be a subchannel of the candidate UWB channel (e.g., channel 7) of Table 0.

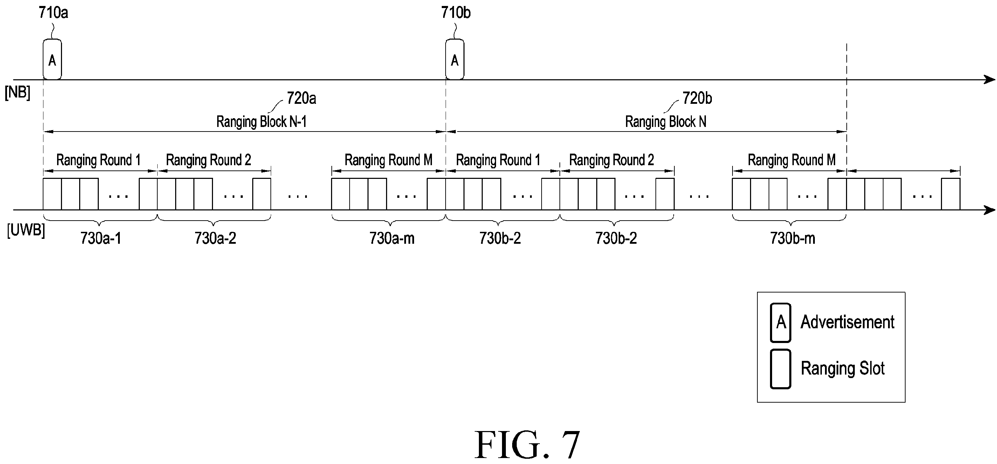

According to an embodiment, the UWB channel 70b and the NB advertisement channel 60b may be synchronized. For the synchronization between the NB channel and the UWB channel, the following description, e.g., the description of embodiments of FIGS. 7 to 14 may be referred to.

As an embodiment, a UWB device serving as an advertiser may transmit an advertisement message (packet) for the UWB channel 70b through the NB advertisement channel 60b allocated for the UWB channel 70b, and a UWB device serving as a scanner may receive an advertisement message (packet) for the UWB channel 70b through the NB advertisement channel 60b.

As an embodiment, the UWB device may scan the NB advertisement channel 60b based on a predetermined scan interval and scan window.

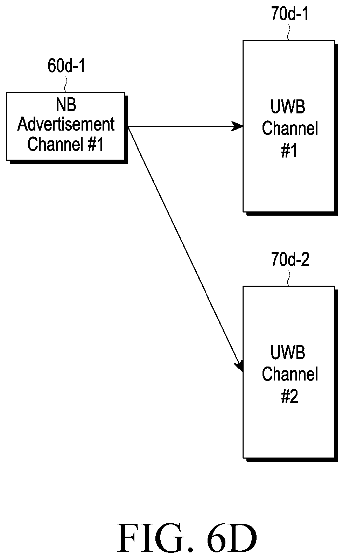

Meanwhile, according to an embodiment, a plurality of UWB channels may be used. Hereinafter, embodiments of a method for allocating an NB advertisement channel for a plurality of UWB channels are described with reference to FIGS. 6C and 6D.

FIG. 6C illustrates a method for allocating an NB advertisement channel for a plurality of UWB channels according to an embodiment of the disclosure.

In the embodiment of FIG. 6C, it is assumed that two UWB channels (e.g., channel 5 or channel 9) are used, but embodiments are not limited thereto. For example, even when three or more UWB channels are used, the following description may be applied.

In the embodiment of FIG. 6C, separate NB advertisement channels 60c-1,60c-2 respectively may be allocated to UWB channels 70c-1,70c-2 to be used. For example, as illustrated, the first NB advertisement channel 60c-1 may be allocated for the use of the first UWB channel 70c-1, and the second NB advertisement channel 60c-1 may be allocated for the use of the second UWB channel 70c-1.

In an embodiment, the first UWB channel 70c-1 may be one (e.g., channel 5) of the candidate UWB channels of Table 0, and the first NB channel 60c-1 may be a subchannel of the candidate UWB channel of Table 0. Further, the second UWB channel 70c-2 may be one (e.g., channel 9) of the candidate UWB channels of Table 0, and the second NB channel 60c-2 may be a subchannel of the candidate UWB channel of Table 0. As an embodiment, the first NB channel 60c-1 and the second NB channel 60c-2 may be different subchannels of the same candidate UWB channel (e.g., channel 7) of Table 0, or may be subchannels of different candidate UWB channels (e.g., channels 7 and 11) of Table 0.

According to an embodiment, each NB advertisement channel 60c-1,60c-2 may be synchronized with the corresponding UWB channels 70c-1,70c-2. For example, the first NB advertisement channel 60c-1 may be synchronized with the first UWB channel 70c-1, and the second NB advertisement channel 60c-2 may be synchronized with the second UWB channel 70c-2. For the synchronization between the NB channel and the UWB channel, the following description, e.g., the description of embodiments of FIGS. 7 to 14 may be referred to.

As an embodiment, the UWB device serving as an advertiser may transmit a first advertisement message (packet) for the first UWB channel 70c-1 through the first NB advertisement channel 60c-1 allocated for the first UWB channel 70c-1, and the UWB device serving as a scanner may receive the first advertisement message (packet) for the first UWB channel 70c-1 through the first NB advertisement channel 60c-1. Further, the UWB device serving as an advertiser may transmit a second advertisement message (package) for the second UWB channel 70c-2 through the second NB advertisement channel 60c-2 allocated for the second UWB channel 70c-2, and the UWB device serving as a scanner may receive a second advertisement message (package) for the second UWB channel 70c-2 through the second NB advertisement channel 60c-2.

As an embodiment, the UWB device may scan the first NB advertisement channel 60c-1 and the second NB advertisement 60c-2 based on a predetermined scan interval and scan window. As an embodiment, the UWB device may scan the first NB advertisement channel 60c-1 and the second NB advertisement 60c-2 simultaneously or alternately.

As an embodiment, the advertisement message transmitted through each of the advertisement channels 60c-1,60c-2 may include information for indicating the use of the corresponding UWB channels 70c-1,70c-2. For example, the first advertisement message of the first NB advertisement channel 60c-1 may include the channel number information about the first UWB channel 70c-1 to be used, and the advertisement message of the second NB advertisement channel 60c-2 may include the channel number information about the second UWB channel 70c-2 to be used.

In the embodiment of FIG. 6C, the UWB device may operate the NB advertisement channel allocated for each UWB channel, obtaining advertising information for the corresponding UWB channel faster than in the embodiment of 6D to be described below.

FIG. 6D illustrates a method for allocating an NB advertisement channel for a plurality of UWB channels according to an embodiment of the disclosure.

In the embodiment of FIG. 6D, it is assumed that two UWB channels (e.g., channel 5 or channel 9) are used, but embodiments are not limited thereto. For example, even when three or more UWB channels are used, the following description may be applied.

In the embodiment of FIG. 6D, unlike the embodiment of FIG. 6D, one NB advertisement channel 60d-1 may be allocated for a plurality of UWB channels 70d-1 and 70d-2. For example, as illustrated, a single first NB advertisement channel 60c-1 may be allocated for the use of the first UWB channel 70c-1 and the second UWB channel 70c-1.

As an embodiment, a single NB advertisement channel allocation method for the plurality of UWB channels, such as FIG. 6D, may be applied when using the multiple access scheme such as direct sequence spread spectrum (DSSS).

As an embodiment, the first UWB channel 70d-1 may be one (e.g., channel 5) of the candidate UWB channels of Table 0, the second UWB channel 70d-2 may be one (e.g., channel 9) of the candidate UWB channels of Table 0, and the first NB channel 60d-1 may be a subchannel of the candidate UWB channel (e.g., channel 7) of Table 0.

As an embodiment, a single advertisement channel 60d-1 may be synchronized with the plurality of UWB channels 70d-1 and 70d-2. For example, the first NB advertisement channel 60d-1 may be synchronized with the first UWB channel 70d-1 and the second UWB channel 70d-2. For the synchronization between the NB channel and the UWB channel, the following description, e.g., the description of embodiments of FIGS. 7 to 14 may be referred to.

As an embodiment, a UWB device serving as an advertiser may transmit a first advertisement message (package) for the first UWB channel 70d-1 and a second advertisement message (package) for the second UWB channel 70d-2 through the first NB advertisement channel 60d-1, and a UWB device serving as a scanner may transmit a first advertisement message (package) for the first UWB channel 70d-1 and a second advertisement message (packet) for the second UWB channel 70d-2 through the first NB advertisement channel 60d-1.

As an embodiment, the UWB device (scanner) may scan the first NB advertisement channel 70d-1 based on a predetermined scan interval and a scan window.

As an embodiment, each advertisement message transmitted through a single advertisement channel 60d-1 may include information for indicating the use of the corresponding UWB channels 70d-1 and 70d-2. For example, the first advertisement message for the first UWB channel 70d-1 may include channel number information about the first UWB channel 70d-1 to be used, and the second advertisement message for the second UWB channel 70d-2 may include channel number information about the second UWB channel 70d-2 to be used.

In the embodiment of FIG. 6D, the UWB device does not operate a separate NB advertisement channel for each UWB channel, but operates only one NB advertisement channel, thereby increasing the efficiency of resource use compared to the embodiment of FIG. 6C.

Hereinafter, various embodiments of the disclosure are described with an example in which one UWB channel is used, but the same description may also be applied when the plurality of UWB channels are used.

FIG. 7 illustrates a structure of a channel used in a ranging area network according to an embodiment of the disclosure.

The ranging area network of FIG. 7 may correspond to the ranging area network of FIG. 6A.

In the embodiment of FIG. 7, the ranging block, the ranging round, and the ranging slot transmitted through the UWB channel may be the ranging block, the ranging round, and the ranging slot used in the session (e.g., a UWB ranging session) already established by the UWB device (e.g., the first UWB device 601 of FIG. 6A) serving as an advertiser/controller.

Referring to FIG. 7, an NB channel and a UWB channel may be used in a ranging area network.

In an embodiment, the NB channel may be used to transmit and/or receive at least one advertisement message. For example, the NB channel may be used to transmit/receive a first advertisement message 710a and a second advertisement message 710b. As described above, the NB channel for the advertisement message may be referred to as an NB advertisement channel.

Further, the NB channel may be used to transmit and/or receive at least one additional advertisement message, a connection request message, and/or a connection confirmation message. As described above, the NB channel for the additional advertisement message, connection request messages and/or connection confirmation message may be referred to as an NB connection setup channel.

In an embodiment, the UWB channel may be used to transmit and/or receive at least one ranging message for UWB ranging. At least one ranging message may be transmitted/received through the ranging blocks 720a and 720b.

As described above with reference to FIG. 5, each ranging block may include at least one ranging round, and each ranging round may include at least one ranging slot. For example, the first ranging block 720a may include M ranging rounds 730a-1, 730a-2,... 730a-m. Each ranging round may include a plurality of ranging blocks. Further, the second ranging block 720b may include M ranging rounds 730b-1, 730b-2,... 730b-m. Each ranging round may include a plurality of ranging blocks.

In an embodiment, the NB channel (or NB transceiver) and the UWB channel (or UWB transceiver) may be, for example, fully synchronized. In this case, 1) mutual discovery between the UWB devices is enabled using energy detection (ED) over the NB channel via a newly defined PHY layer entity to support the NB channel. 2) Further, it is possible to identify, e.g., the start time or structure of the ranging block transmitted through the UWB channel using the advertisement message received through the NB channel. In this case, some information about the current UWB session that has already been established may be signaled implicitly. 3) Further, it is possible to save power as the use of the NB channel and the UWB channel may be turned on/off.

In the following embodiment, various embodiments of the disclosure are described assuming that the NB channel and the UWB channel are, for example, fully synchronized. However, embodiments of the disclosure are not limited thereto. For example, even when partially synthesized or not synthesized, embodiments of the disclosure may be partially adjusted and applied according to the circumstances.

FIG. 8 illustrates a first method for a UWB device to transmit an NB advertisement message in an NB channel according to an embodiment of the disclosure.

In the embodiment of FIG. 8, the UWB device that transmits the NB advertisement message may be a UWB device that serves as a controller and an advertiser. For example, the UWB device of FIG. 8 may be the first UWB device 601 of FIG. 6A.

The transmission of the NB advertisement message according to an embodiment of FIG. 8 may be controlled/managed by the MAC layer of the UWB device.

Referring to FIG. 8, the UWB device may transmit an NB advertisement message at the start time of each ranging block (i.e., at each start time of the ranging block) through the NB channel. For example, the UWB device may transmit the first NB advertisement message 810a at the start time of the first ranging block 820a through the NB advertisement channel and the second NB advertisement message 810b at the start time of the second ranging block 820b through the NB advertisement channel. Here, the start time may be the start time of the first slot of the corresponding ranging block.

As such, when the NB advertisement message is transmitted at the start time of each ranging block, even if the NB advertisement message does not include information about the start time of the corresponding ranging block, the start time of the corresponding ranging block may be identified through the transmission time (or reception time) of the NB advertisement message. In other words, even without explicit signaling, the start time of the ranging block may be implicitly signaled.

In an embodiment, the transmission time of the NB advertisement message may be identified based on a transmission timestamp included in the NB advertisement message.

In an embodiment, the NB advertisement message may include information about the UWB channel (UWB channel information). For example, the NB advertisement message may include occupancy information (UWB channel occupancy information) about the UWB channel. For example, UWB channel information or UWB channel occupancy information may include at least one of information about the start time of the ranging round, information about channel occupancy time (e.g., information about channel occupancy time represented as a multiple of the time unit (TU)), information about the length of the ranging block, information about the length of the ranging round, or information about the number or round numbers of active rounds. Here, the active round may be a ranging round that is actually used (or occupied) among the ranging rounds.

In an embodiment, the NB advertisement message may include configuration information (UWB configuration information) for receiving a message (or packet) (or frame) on the UWB channel. For example, the UWB configuration information may include information about the PHY configuration and/or information about the STS index.

As illustrated in FIG. 8, the first NB advertisement message 810a transmitted at the start time of the first ranging block 820a may include information about the length of the ranging block set to L, information about the number of ranging rounds set to 4, and information about the round numbers of active rounds set to '1' and '2'. Accordingly, the start time of the first ranging block 820a may be implicitly signaled, and the length of the first ranging block 820a, the number of ranging rounds included in the first ranging block 820a, and the round numbers of active rounds may be explicitly signaled. Accordingly, the UWB device receiving the first NB advertisement message 810a may identify the start time and full length L of the first ranging block 820a, and may identify that four ranging rounds are included in the first ranging block 820a, and the first and second rounds among them are active. The UWB device may perform UWB ranging based on the identified information.

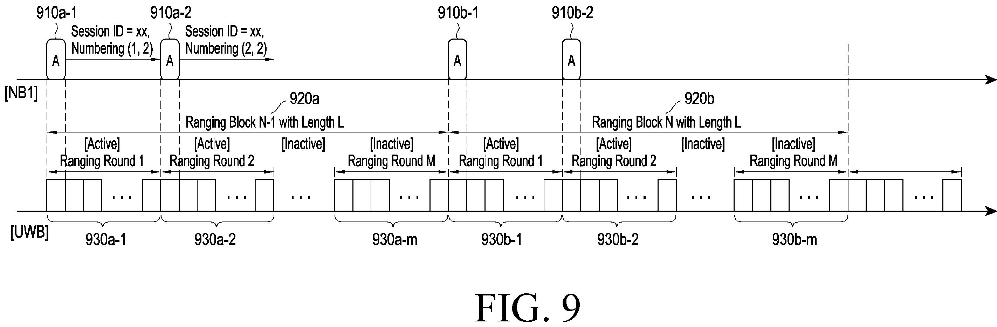

FIG. 9 illustrates a second method for a UWB device to transmit an NB advertisement message in an NB channel according to an embodiment of the disclosure.

In the embodiment of FIG. 9, the UWB device that transmits the NB advertisement message may be a UWB device that serves as a controller and an advertiser. For example, the UWB device of FIG. 9 may be the first UWB device 601 of FIG. 6A.

The transmission of the NB advertisement message according to an embodiment of FIG. 9 may be controlled/managed by the MAC layer of the UWB device.

Referring to FIG. 9, the UWB device may transmit an NB advertisement message at the start time of each active round (i.e., at each start time of the active round) through the NB channel. For example, the UWB device may transmit NB advertisement messages 910a-1 and NB advertisement messages 910a-2, respectively, at the start time of the active round 930a-1 and at the start time of the active round 930a-2 of the first ranging block 920a through the NB advertisement channel and may transmit NB advertisement messages 910b-1 and 910b-2, respectively, at the start time of the active round 930b-1 and at the start time of the active round 930b-2 of the first ranging block 920b through the NB advertisement channel. Here, the start time may be the start time of the first slot of the corresponding active round.

As such, if the NB advertisement message is transmitted at the start time of each active round, even when the NB advertisement message does not include information about the number and start times of the active rounds, the number and start times of the active rounds may be identified through the number of transmissions and the transmission time (or reception time) of the NB advertisement message. In other words, even without explicit signaling, the number and the start times of the active rounds may be implicitly signaled. Further, the length of the ranging round may be estimated through the interval (transmission interval) of the NB advertisement message.

Therefore, when following the method of FIG. 9, at least one of the information included in the NB advertisement message of the embodiment of FIG. 8 may be excluded from the NB advertisement message. For example, the NB advertisement message in FIG. 9 may not include at least one of the length of the corresponding ranging block, the length of the ranging round, or information (count/round number) about the active round. Accordingly, the congestion level of the NB advertisement channel may be decreased.

In an embodiment, the transmission time of the NB advertisement message may be identified based on a transmission timestamp included in the NB advertisement message.

On the other hand, e.g., when one ranging block is used by the plurality of controllers, the active rounds included in the ranging block may be used by different controllers. Therefore, it is necessary to signal whether the active rounds belong to the same session or are used by the same controller.

In an embodiment, the NB advertisement message may include information for identifying whether active rounds included in the same block belong to the same session or are used by the same controller. For example, the NB advertisement message may include information (session ID information) about the session ID of the session to which the active round belongs (e.g., ranging session) and/or information (address information) about the address of the UWB device that transmits the NB advertisement message associated with the active round (e.g., source MAC address).

This session ID information or address information may be used to distinguish whether the active round(s) in the same ranging block belong to the same session (or whether they are used by the same controller), or whether they belong to different sessions (or whether they are used by the same controller). For example, active rounds corresponding to NB advertisement messages with the same session ID (or address) in the same ranging block may be active rounds belonging to the same session.

In an embodiment, the NB advertisement message may include numbering information for indicating which number of active round among all the active rounds in the corresponding ranging block the NB advertisement message corresponds to. For example, if the numbering information is set to (1,2), as illustrated, the numbering information may indicate that the corresponding NB advertisement message corresponds to the first active round out of a total two active rounds in the corresponding ranging block. Alternatively, if the numbering information is set to (2,2), the numbering information may indicate that the corresponding NB advertisement message corresponds to the second active round out of the total of two active rounds in the corresponding ranging block.

As illustrated in FIG. 9, the NB advertisement message 910a-1 transmitted at the start time of the active round 930a-1 includes session ID information set to 'Session ID = xx' and numbering information set to (1, 2), and the NB advertisement message 910a-2 transmitted at the start time of the active round 930a-2 includes session ID information set to 'Session ID = xx' and numbering information set to (2, 2). In this case, the session ID of the NB advertisement message 910a-1 is the same as the session ID of the NB advertisement message 910a-2.

The UWB device (receiving UWB device) that received the NB advertisement message 910a-1 and the NB advertisement message 910a-2 may identify that the active round 930a-1 corresponding to the NB advertisement message 910a-1 and the active round 930a-2 corresponding to the NB advertisement message 910a-2 belong to the same session, with the active round 930a-1 being the first active round out of the total two active rounds, and the active round 930a-2 being the second active round out of the total two active rounds.

Further, the receiving UWB device may identify the interval between the active round 930a-1 and the active round 930a-2 through the interval between the NB advertisement message 910a-1 and the NB advertisement message 910a-2, thereby estimating the length of the active round. The UWB device may perform UWB ranging based on the identified information.

Meanwhile, if there is no active round in the corresponding ranging block, as illustrated in FIG. 8, the UWB device may transmit the NB advertisement message at the start time of the corresponding ranging block.

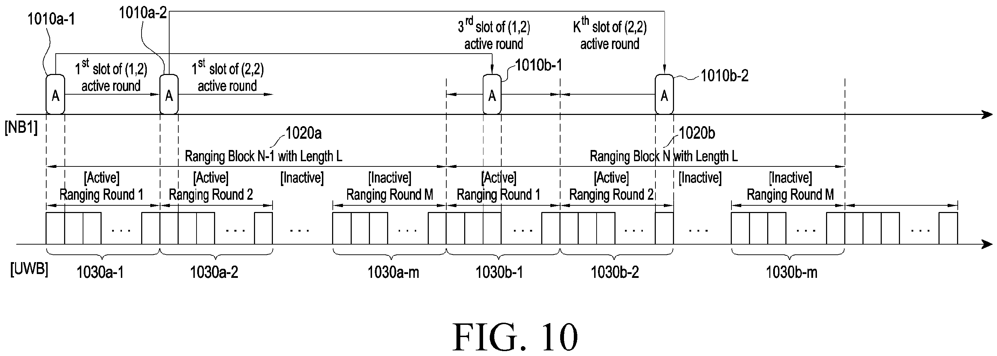

FIG. 10 illustrates a third method for a UWB device to transmit an NB advertisement message in an NB channel according to an embodiment of the disclosure.

In the embodiment of FIG. 10, the UWB device that transmits the NB advertisement message may be a UWB device that serves as a controller and an advertiser. For example, the UWB device of FIG. 10 may be the first UWB device 601 of FIG. 6A.

The transmission of the NB advertisement message according to an embodiment of FIG. 10 may be controlled/managed by the MAC layer of the UWB device.

Referring to FIG. 10, the UWB device may transmit an NB advertisement message through the NB channel in one selected from among the slots in each ranging block or each active round. The selected slot may not be the start slot. For example, the UWB device may transmit the NB advertisement message 1010b-1 in the third slot of the active round 1030b-1 of the second ranging block 1020b through the NB advertisement channel, and the NB advertisement message 1010b-2 in the kth slot of the active round 1030b-2 of the second ranging block 1020b through the NB advertisement channel.

When the plurality of UWB devices transmit advertisement messages, infinite conflicts may occur between NB advertisement messages transmitted at the same time (e.g., the start time of each ranging block or the start time of each active round). Therefore, as in the embodiment of FIG. 10, the conflicts between NB advertisement messages may be avoided by using a randomly selected transmission time of the NB advertisement message, rather than using an always fixed time.

However, in order to indicate the transmission time of the NB advertisement message, the NB advertisement message may include information about the transmission time of the current (own) NB advertisement message and/or information about the transmission time of the corresponding NB advertisement message transmitted after the current NB advertisement message.

In an embodiment, the NB advertisement message may include information (transmission slot indication information) indicating in which slot the current NB advertisement message or the corresponding NB advertisement message starts transmission (slot unit shift) and/or information about the length of the slot (slot length information).

For example, the NB advertisement message 1010a-1 transmitted in the first active round 1030a-1 of the first ranging block 1020a may include transmission slot indication information (e.g., information indicating that the transmission of the corresponding NB advertisement message begins in the 3rd slot) and/or slot length information for the NB advertisement message 1010b-1 transmitted in the first active round 1030b-1 of the second ranging block 1020b. Alternatively, the NB advertisement message 1010a-2 transmitted in the second active round 1030a-2 of the first ranging block 1020a may include transmission slot indication information (e.g., information indicating that transmission of the corresponding NB advertisement message begins in the kth slot) and/or slot length information for the NB advertisement message 1030b-2 transmitted in the second active round 1030b-2 of the second ranging block 1020b. Accordingly, the transmission time of the NB advertisement message transmitted in the following ranging block may be identified.

As another example, the NB advertisement message 1010a-1 transmitted in the first active round 1030a-1 of the first ranging block 1020a may include transmission slot indication information (e.g., information indicating that the transmission of the current (own) NB advertisement message begins in the 1st slot) and/or slot length information for the current NB advertisement message 1010a-1. Alternatively, the NB advertisement message 1010a-2 transmitted in the second active round 1030a-2 of the first ranging block 1020a may include transmission slot indication information (e.g., information indicating that the transmission of the current (own) NB advertisement message begins in the first slot) and/or slot length information for the current (own) NB advertisement message 1010a-2. Accordingly, the transmission time of its own NB advertisement message may be identified.

As another example, the NB advertisement message 1010a-1 transmitted in the first active round 1030a-1 of the first ranging block 1020a may include transmission slot indication information (e.g., information indicating that the transmission of the current (own) NB advertisement message starts in the 1st slot) and/or slot length information for the current NB advertisement message 1010a-1, and transmission slot indication information (e.g., information indicating that the transmission of the corresponding NB advertisement message starts in the 3rd slot) and/or slot length information for the NB advertisement message 1010b-1 transmitted in the first active round 1030b-1 of the second ranging block 1020b. Or, the NB advertisement message 1010a-2 transmitted in the second active round 1030a-2 of the first ranging block 1020a may include transmission slot indication information (e.g., information indicating that the transmission of the current (own) NB advertisement message starts in the 1st slot) and/or slot length information for the current NB advertisement message 1010a-2, and transmission slot indication information (e.g., information indicating that the transmission of the corresponding NB advertisement message starts in the kth slot) and/or slot length information for the NB advertisement message 1010b-2 transmitted in the second active round 1030b-2 of the second ranging block 1020b. Accordingly, the transmission time of its own NB advertisement message and the transmission time of another NB advertisement message transmitted in the following ranging block may be identified.

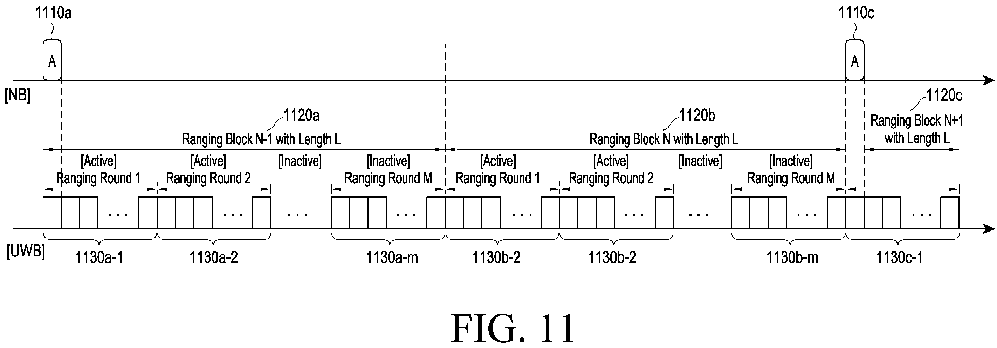

FIG. 11 illustrates a fourth method for a UWB device to transmit an NB advertisement message in an NB channel according to an embodiment of the disclosure.

In the embodiment of FIG. 11, the UWB device that transmits the NB advertisement message may be a UWB device that serves as a controller and an advertiser. For example, the UWB device of FIG. 11 may be the first UWB device 601 of FIG. 6A.

The transmission of the NB advertisement message according to an embodiment of FIG. 11 may be controlled/managed by the MAC layer of the UWB device.

Referring to FIG. 11, the UWB device may transmit the NB advertisement message once in several ranging blocks, rather than transmitting the NB advertisement message through the NB channel in each ranging block. For example, the UWB device may transmit the NB advertisement message 1110a in the first ranging block 1120a through the NB advertisement channel, and transmit the NB advertisement message 1110c in the third ranging block 1120b without transmitting the NB advertisement message in the second ranging block 1120b. As such, an NB advertisement message may be transmitted once for every two ranging blocks. As such, it is possible to reduce the consumption of transmission power by transmitting the NB advertisement message once every preset period rather than transmitting the NB advertisement message every range block.

Meanwhile, the period of the ranging block in which the NB advertisement message is transmitted may be variously set according to an embodiment. In an embodiment, the NB advertisement message may include information about the period of the ranging block in which the NB advertisement message is transmitted. For example, the NB advertisement message or information about the period of the ranging block may include information (first information) about how many ranging blocks have been skipped or information (second information) about the number of consecutive ranging blocks where an NB advertisement message is not transmitted. Based on this information, the UWB device receiving the NB advertisement message may identify how many ranging blocks have been skipped without transmitting the NB advertisement message.

For example, in the illustrated embodiment, the NB advertisement message may include first or second information set to 1. In this case, the UWB device receiving the corresponding NB advertisement message may identify that one ranging block has been skipped without transmitting the NB advertisement message.

Meanwhile, the transmission of the NB advertisement message in the ranging block where the NB advertisement message is transmitted may be performed, e.g., using one or a combination of the methods of FIG. 8, 9, or 11. For example, an NB advertisement message may be transmitted at the start time of the ranging block according to the method of FIG. 8, an NB advertisement message may be transmitted at the start time of the active round according to the method of FIG. 9, or an NB advertisement message may be transmitted in any selected slot of the ranging block or active round according to the method of FIG. 10, or an NB advertisement message may be transmitted according to a combination thereof.

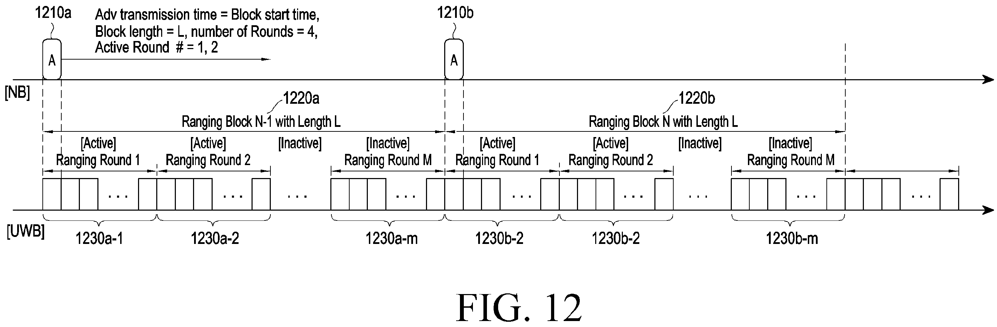

FIG. 12 illustrates the operation of a UWB device receiving an NB advertisement message in an NB channel according to an embodiment of the disclosure.

In the embodiment of FIG. 12, the UWB device receiving the NB advertisement message may be a UWB device serving as a controller and scanner. For example, the UWB device of FIG. 12 may be the third UWB device 603 of FIG. 6A.

The reception and processing of the NB advertisement message according to the embodiment of FIG. 12 may be controlled/managed by the MAC layer of the UWB device.

In the embodiment of FIG. 12, as in the embodiment of FIG. 8, it is assumed that the first NB advertisement message 1210a corresponds to the NB advertisement message transmitted at the start time of the first ranging block 1220a, and the second NB advertisement message 1210b corresponds to the NB advertisement message transmitted at the start time of the first ranging block 1220b. However, embodiments are not limited thereto. For example, the first NB advertisement message 1210a and the second NB advertisement message 1210b may be NB advertisement messages transmitted according to one of the transmission methods of FIGS. 8 to 11 or a combination thereof.

Referring to FIG. 12, the UWB device may receive an NB advertisement message by scanning the NB channel. For example, the UWB device may scan the NB advertisement channel to receive the first NB advertisement message 1210a and the second NB advertisement message 1210b transmitted at the start time of each ranging block. As illustrated, the first NB advertisement message 1210a may include, e.g., block length information set to L, ranging count information set to 4, and active round number information set to '1, 2'.

Accordingly, the UWB device may identify that the start time of the first ranging block 1220a corresponding to the first NB advertisement message 1210a corresponds to the transmission time of the first NB advertisement message 1210a, the length of the first ranging block 1220a corresponds to L, the total number of ranging rounds included in the first ranging block 1220a corresponds to 4, and the round numbers of active rounds included in the ranging block 1220a is 1 and 2. Accordingly, the UWB device may grasp the surrounding UWB usage environment.

After grasping the UWB usage environment, the UWB device, as the controller, may determine UWB settings such as ranging block length, start time, and transmission offset for its UWB session, and may start its own UWB session based thereon.

In an embodiment, the transmission offset may be appropriately adjusted according to the duration of the ranging slot and/or the duration of a UWB message (e.g., RFRAME). Collision avoidance is possible through the setting of such a transmission offset.

Further, when the UWB transceiver is activated for UWB communication, the UWB device may deactivate the NB transceiver for NB advertisement reception. Accordingly, it is possible to save power

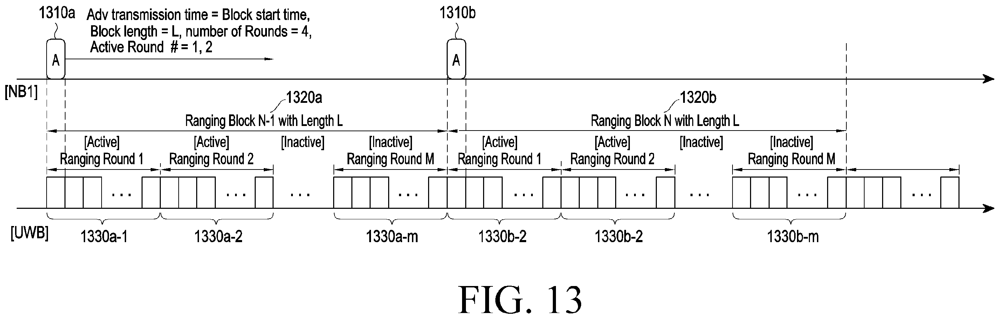

FIG. 13 illustrates the operation of a UWB device receiving an NB advertisement message in an NB channel according to another embodiment of the disclosure.

In the embodiment of FIG. 13, the UWB device receiving the NB advertisement message may be a UWB device that serves as a controller and scanner. For example, the UWB device of FIG. 13 may be the third UWB device 603 of FIG. 6A.

The reception and processing of the NB advertisement message according to the embodiment of FIG. 13 may be controlled/managed by the MAC layer of the UWB device.

In the embodiment of FIG. 13, as in the embodiment of FIG. 8, it is assumed that the first NB advertisement message 1310a corresponds to the NB advertisement message transmitted at the start time of the first ranging block 1320a, and the second NB advertisement message 1310b corresponds to the NB advertisement message transmitted at the start time of the first ranging block 1320b. However, embodiments are not limited thereto. For example, the first NB advertisement message 1310a and the second NB advertisement message 1310b may be NB advertisement messages transmitted according to one of the transmission methods of FIGS. 8 to 11 or a combination thereof.

Referring to FIG. 13, the UWB device may receive an NB advertisement message by scanning the NB channel. For example, the UWB device may scan the NB advertisement channel to receive the first NB advertisement message 1310a and the second NB advertisement message 1310b transmitted at the start time of each ranging block. As illustrated, the first NB advertisement message 1310a may include, e.g., block length information set to L, ranging count information set to 4, and active round number information set to '1, 2'.

Accordingly, the UWB device may identify that the start time of the first ranging block 1320a corresponding to the first NB advertisement message 1310a corresponds to the transmission time of the first NB advertisement message 1310a, the length of the first ranging block 1320a corresponds to L, the total number of ranging rounds included in the first ranging block 1320a corresponds to 4, and the round numbers of active rounds included in the ranging block 1320a is 1 and 2. Accordingly, the UWB device may grasp the surrounding UWB usage environment.

After grasping the UWB usage environment, if there is a UWB session that it is to participate in, the UWB device, as a controller, may participate in the corresponding UWB session. For example, the UWB device may determine the UWB session that it is to participate in based on the information included in the NB advertisement message, receive a control message through the UWB channel of the corresponding UWB session, and perform UWB ranging based on the control message. As another example, the UWB device may perform UWB ranging through the UWB channel after performing a connection setup operation for additional parameter exchange and/or authentication through the NB connection setup channel.

Further, when the UWB transceiver is activated for UWB communication, the UWB device may deactivate the NB transceiver for NB advertisement reception. Accordingly, it is possible to save power

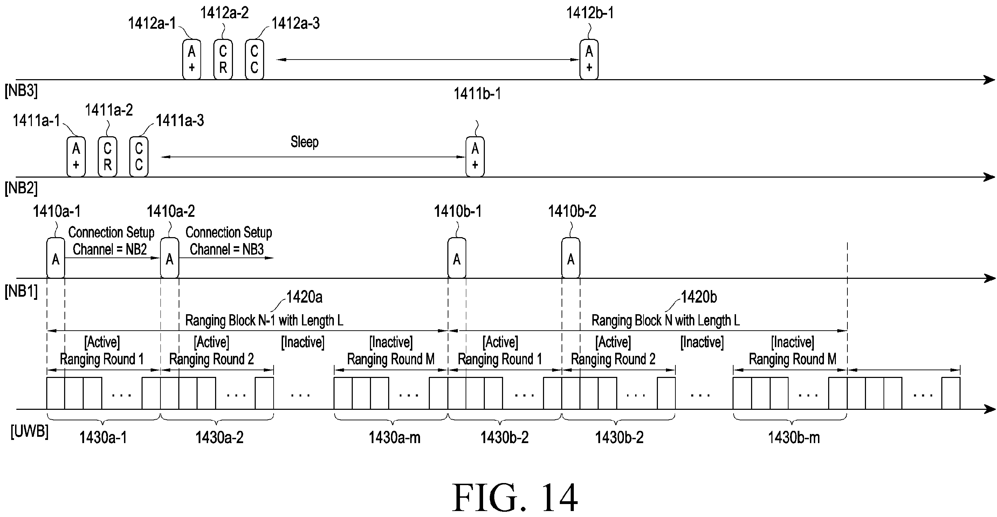

FIG. 14 illustrates operations of a UWB device for NB connection setup according to another embodiment of the disclosure.

In the embodiment of FIG. 14, the UWB device (first UWB device) that transmits the NB advertisement message may be a UWB device that serves as a controller and advertiser, and the UWB device (second UWB device) that receives the NB advertisement message may be a UWB device that serves as a controller and scanner. For example, the first UWB device of FIG. 14 may be the first UWB device 601 of FIG. 6A, and the second UWB device may be the third UWB device 603 of FIG. 6A.

In the embodiment of FIG. 14, the transmission/reception of an NB advertisement message, the transmission/reception of an additional NB advertisement message, the transmission/reception of a connection request message/connection response message, and the processing thereof may be controlled/managed by the MAC layer of the UWB device.

In the embodiment of FIG. 14, as in the embodiment of FIG. 9, it is assumed that the NB advertisement message was transmitted at the start time of the active round. However, embodiments are not limited thereto. For example, the NB advertisement message may be an NB advertisement message transmitted according to one of the transmission methods of FIGS. 8 to 11 or a combination thereof.

Referring to FIG. 14, the first UWB device may transmit an NB advertisement message at the start time of each active round (i.e., at each start time of the active round) through the NB channel. For example, the first UWB device may transmit NB advertisement messages 1410a-1 and NB advertisement messages 1410a-2, respectively, at the start time of the active round 1430a-1 and at the start time of the active round 1430a-2 of the first ranging block 1420a through the NB advertisement channel NB1 and may transmit NB advertisement messages 1410b-1 and 1410b-2, respectively, at the start time of the active round 1430b-1 and at the start time of the active round 1430b-2 of the second ranging block 1420b through the NB advertisement channel NB1.

Meanwhile, if the information provided in the NB advertisement message is insufficient to perform UWB communication, the first UWB device may allocate a separate NB channel (connection setup channel) for additional information transmission or connection setup, and may transmit the information thereabout to the second UWB device through the NB advertisement message.

In an embodiment, the NB advertisement message may include information (connection setup channel information) about the corresponding connection setup channel. For example, the NB advertisement message 1410a-1 and the NB advertisement message 1410b-1 may include connection setup channel information (e.g., subchannel number) set to NB2, and the NB advertisement message 1410a-2 and NB advertisement message 1410b-2 may include connection setup channel information (e.g., subchannel number) set to NB3.

In an embodiment, the first UWB device may transmit an additional NB advertisement message including additional advertising information on the corresponding connection setup channel. For example, the first UWB device may broadcast additional NB advertisement messages 1411a-1 and 1411b-1 including additional advertising information on the connection setup channel corresponding to NB2, and the first UWB device may broadcast additional NB advertisement messages 1412a-1 and 1412b-1 including additional advertising information on the connection setup channel corresponding to NB3. In an embodiment, the additional NB advertisement message may include detailed structure information about the ranging block of the corresponding UWB session. The detailed structure information may include, e.g., the length of the ranging block, the number/length of ranging rounds, and/or the number/length of ranging slots.

The second UWB device to participate in a specific ranging block/round on the UWB channel may transmit a connection request message for this purpose. In an embodiment, the second UWB device may transmit a connection request message to the first UWB device on the corresponding connection setup channel. For example, the second UWB device may transmit the connection request message 1411a-2 to the first UWB device on the connection setup channel corresponding to NB2, and the second UWB device may transmit the connection request message 1412a-2 to the first UWB device on the connection setup channel corresponding to NB3.

In an embodiment, the first UWB device may transmit a connection confirmation message corresponding to the connection request message to the second UWB device on the corresponding connection setup channel. For example, the first UWB device may transmit the connection confirmation message 1411a-3 to the second UWB device on the connection setup channel corresponding to NB2, and the first UWB device may transmit the connection confirmation message 1412a-3 to the second UWB device on the connection setup channel corresponding to NB3. In an embodiment, the connection confirmation message may include slot allocation information.

Meanwhile, the above-described exchange operation of the connection request message and the connection confirmation message may be repeatedly performed as many times as necessary. For example, after one message exchange, if additional message exchanges are required (i.e., when message exchange is required for further parameter negotiation and/or authentication), as many message exchange operations as necessary on the corresponding NB connection setup channel (sub advertisement channel) may be further performed.

As such, when an operation for transmission of an additional NB advertisement message and/or connection setup through the advertisement channel (discovery channel) and a separate NB channel (connection setup channel) is performed, the congestion of the discovery channel may be decreased and the plurality of NB channels may be operated efficiently.

Meanwhile, if the message exchange procedure through the connection setup channel is completed, the corresponding connection setup channel may remain in a sleep state. In this case, the UWB device (or the NB transceiver of the UWB device) may not scan the corresponding connection setup channel until, e.g., the corresponding connection setup channel of the next ranging block is activated, as illustrated.

Hereinafter, a method for UWB channel coordination for better UWB coexistence is described. The following embodiments may be applied in combination with the above-described embodiments as long as they do not contradict each other.

Meanwhile, in the above-described embodiments, an NB channel (e.g., the NB connection setup channel) is used for further transmission of additional advertising and/or connection setup information in addition to the advertisement information transmitted through the NB advertisement channel, but the disclosure is not limited thereto. For example, the UWB channel (e.g., the UWB advertisement) may be used instead of the NB channel to further transmit additional advertisement and/or connection setup information in addition to the advertisement information transferred through the NB advertisement channel. In this case, the NB advertisement message transmitted through the NB advertisement channel may include UWB channel number information about the UWB advertisement channel, and the UWB advertisement message transmitted through the UWB advertisement channel may include the whole or part of the information included in the above-described additional NB advertisement message, connection request message, and/or connection confirmation message.

In the disclosure, the NB packet including the NB advertisement message or the NB advertisement message may be referred to as an NB AP (acquisition packet) message or an NB AP packet. The NB AP message/packet may include the whole or part of the information included in the NB advertisement message/packet described above in FIGS. 1 to 14. In FIGS. 7 to 14, the NB AP message/packet may be transmitted at the time when the NB advertisement message/packet is transmitted.

In the disclosure, the UWB packet including the UWB advertisement message or the UWB advertisement message may be referred to as a UWB AP message or a UWB AP packet. Further, the UWB AP message/packet may include the whole or part of the information included in the additional NB advertisement message, connection request message, and/or connection confirmation message described above in FIGS. 1 to 14. In FIGS. 7 to 14, the UWBAP message/packet may be transmitted at the time when the additional NB advertisement message, the connection request message, or the connection confirmation message is transmitted.

The UWB AP may have the structure of the UWB packet, and the NB AP may have the structure of the NB packet. For example, the UWB AP and the NB AP may include a synchronization header (SHR), a PHY header (PHR), and/or a PHY payload (PSDU). The PSDU may include a MAC header (MHR), a MAC payload, and/or a MAC footer (MFR).

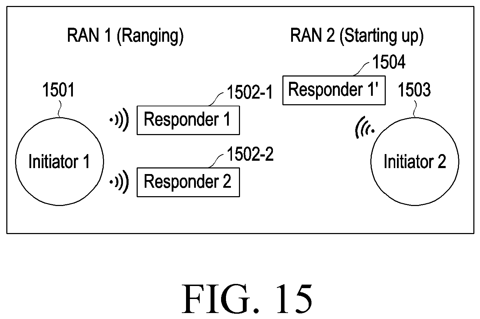

FIG. 15 illustrates a configuration of a plurality of ranging area networks (RANs) according to an embodiment of the disclosure.

The RAN configuration of FIG. 15 may be an example of the RAN configuration of FIG. 6A. For example, the first UWB device (initiator) 1501 of RAN1 of FIG. 15 may correspond to the first UWB device 601 of FIG. 6A, the 2-1th UWB device (responder 1) 1502-1 and the 2-2th UWB device (responder 2) 1502-2 of RAN1 of FIG. 15 may correspond to the second UWB device 602 of FIG. 6A, and the third UWB device (initiator) 1503 of RAN2 of FIG. 15 may correspond to the third UWB device 603 of FIG. 6A. Accordingly, for the description of the operation of the first UWB device (initiator) 1501, the 2-1th UWB device (responder 1) 1502-1, the 2-2th UWB device (responder 2), and the third UWB device (initiator) 1503 of FIG. 15, the description of the first UWB device 601, the second UWB device 602, and the third UWB device 603 of FIGS. 6A to 14 may be referred to, unless they are not contradictory to each other.

In FIG. 15, the first RAN (RAN 1) may be an RAN currently performing UWB ranging through the UWB channel, and the second RAN (RAN 2) may be an RAN that intends to start UWB ranging using the corresponding UWB channel.

Referring to FIG. 15, in RAN1, one initiator 1501 may perform UWB ranging with a plurality of responders (e.g., responders 1/2 1502-1 and 1502-2), but the disclosure is not limited thereto. The numbers of initiators and responders capable of performing UWB ranging may vary.

As an embodiment, the first UWB device 1501 of RAN1 may transmit or broadcast NB AP messages/packets through the NB channel. As an embodiment, the NB AP message/packet may provide information about the UWB AP and/or at least one per-session information. In the disclosure, the NB AP message/packet may be abbreviated as an NB AP.

The MAC payload included in the NB AP message/packet may include information included in Table 1 or Table 2 to be described below. Further, the payload of the NB AP message/packet may further include the whole or part of the information included in the NB advertisement message/packet described above in FIGS. 1 to 14.

As an embodiment, the initiator of RAN1 may transmit or broadcast the UWB AP message/packet through the UWB channel. In an embodiment, the UWB AP message/packet may include information about the RAN (e.g., RAN1) where the UWB AP has been transmitted. In the disclosure, the UWB AP message/packet may be abbreviated as an NB AP.

The MAC payload included in the UWB AP message/packet may include information/fields included in Table 3 or Table 4 to be described below. Further, the payload of the UWB AP message/packet may include the whole or part of the information included in the additional NB advertisement message, connection request message, and/or connection confirmation message described in connection with FIGS. 1 to 14.

The third UWB device 1503 of RAN2 that starts a new ranging session may establish and start its own ranging session while avoiding a collision with RAN1 using the NB AP and/or UWB AP of RAN1. The third UWB device 1503 may perform UWB ranging with the fourth UWB device (responder 1') 1504.

Table 1 shows an example of information/fields included in the MAC payload included in the NB AP. The MAC payload of the NB AP in Table 1 may be referred to as a first NB AP MAC payload.

[Table 1]

| MAC Payload | | Bits | Bytes | Comments |
|---|---|---|---|---|
| Common Info f ield | AP Type | 3 | 1 | 0: Coordination NB AP<br>1: Compressed Coordination NB AP<br>2:8: RFU |
| | UWB AP Pres ent | 1 | | 0: No UWB AP follows the NBAP<br>1: UWB AP follows the NB AP |
| | RFU | 4 | | Unused |
| UWB AP Info fi eld | Delta T | 16 | 2 | Time remaining in RSTU until the start of the next UWB AP relative to the start of the current packet |
| | UWB CH | 5 | 1 | UWB CH number on which the UWB AP occurs after Delta T |
| | RFU | 3 | | Unused |
| | Preamble Co de | 8 | 1 | Preamble code used by UWB AP |

Referring to Table 1, the first NB AP MAC payload may include a common information (info) field and/or a UWB AP information field. In the disclosure, the UWB AP information field may also be referred to as a UWB information field.

The common information field may include an AP type field and a UWB AP present field.

The AP type field may indicate the type of the NB AP. The AP type field may be set to one of a first value (e.g., 0) indicating that the type of the NB AP is a coordination NB AP type, or a second value (e.g., 1) indicating that the type of the NB AP is a compressed coordination NB AP type. If the NB AP type is the compressed coordination NB AP type (e.g., AP type=1), the NB AP (or the first NB AP MAC payload) does not include a per-session info field. When the NB AP type is the coordination NB AP type (e.g., AP type=0), the NB AP (or the first NB AP MAC payload) includes at least one per-session information field. The per-session information field(s) may be duplicated to the per-session information field(s) in the UWB AP to be described below. For the description of the per-session information field, the description of the per-session information field in Table 3 or Table 4 to be described below may be referred to.

The UWB AP present field may include a first value (e.g., 0) indicating that there is no UWB AP following the NB AP or a second value (e.g., 1) indicating that the UWB AP follows the NB AP.

The UWB AP information field may include a delta T field, a UWB channel field, and/or a preamble code field. As an embodiment, the UWB AP information field may be included only when the UWB AP present field is set to the second value (e.g., 1) indicating that the UWB AP follows the NB AP.

The delta T field may indicate a remaining time (delta T) in RSTU units from the start of the current packet (current NB AP) to the start of the next UWB AP.

The UWB channel field may indicate the number of the UWB channel where the UWB AP occurs after Delta T.

The preamble code field may indicate the preamble code used by the UWB AP.

Table 2 illustrates another example of information/fields included in the MAC payload included in the NB AP. Unlike the MAC payload of the NB AP in Table 1, the MAC payload of the NB AP in Table 2 may include a UWB information field (UWB AP information field), even when the UWB AP is not present after the NB AP. Further, the MAC payload of the NB AP in Table 2 may further include an active period duration field. The MAC payload of the NB AP in Table 2 may be referred to as a second NB AP MAC payload.

[Table 2]

| MAC Payload | | Bits | Bytes | Comments |
|---|---|---|---|---|
| Common Info field | AP Type | 3 | 1 | 0: Coordination NB AP<br>1: Compressed Coordination NB AP<br>2:8: RFU |
| | UWB AP Present | 1 | | 0: No UWB AP follows the NB AP<br>1: UWB AP follows the NB AP |
| | RFU | 4 | | Unused |
| UWB Info field | Delta T | 0/24 | 3 | If UWB AP Present is 0<br>- AP Type = 0 : Not Presented<br>- AP Type = 1 : Time remaining in RSTU until the start of active period<br>If UWB AP Presentis 1 : Time remaining in RSTU until the start of the next UWB AP re lative to the start of the current packet |
| | UWBCH | 5 | 1 | If UWB AP Presentis 0<br>- AP Type = 0 : Not Presented<br>- AP Type = 1 : UWB CH number on which the UWB session occurs after Delta T<br>If UWB AP Present is 1 : UWB CH number on which the UWB AP occurs after Delta T |
| | RFU | 3 | | Unused |
| | Preamble Code | 8 | 1 | If UWB AP Present is 0<br>- AP Type = 0 : Not Presented<br>- AP Type = 1 : Preamble code used by UWB session<br>If UWB AP Present is 1 : Preamble code used by UWB AP |
| | Active Period Dur ation | 0/24 | 3 | If UWB AP Presentis 0<br>- AP Type = 0 : Not Presented<br>- AP Type = 1 : Duration of active period of UWB session<br>If UWB AP Present is 1 : Not presented |

Referring to Table 2, the second NB AP MAC payload may include a common information field and/or a UWB information field.

The common information field may include an AP type field and a UWB AP present field.

The AP type field may indicate the type of the NB AP. The AP type field may be set to one of a first value (e.g., 0) indicating that the type of the NB AP is a coordination NP type, or a second value (e.g., 1) indicating that the type of the NB AP is a compressed coordination NB AP type. If the NB AP type is the compressed coordination NB AP type (AP type=1), the NB AP (or the second NB AP MAC payload) does not include a per-session info field. When the NB AP type is the coordination NB AP type (AP type=0), the NB AP (or the second NB AP MAC payload) includes at least one per-session information field after the UWB information field.

The UWB AP present field may include a first value (e.g., 0) indicating that there is no UWB AP following the NB AP or a second value (e.g., 1) indicating that the UWB AP follows the NB AP.

The UWB information field may include a delta T field, a UWB channel field, a preamble code field, and/or an active period duration field. Unlike the embodiment of Table 1, in the embodiment of Table 2, even when the UWB AP present field is set to the first value (e.g., 0) indicating that there is no UWB AP following the NB AP, the UWB information field may be present.

The delta T field may indicate different information according to the value of the UWB AP present field.

For example, if the UWB AP present field is set to the second value indicating that the UWB AP follows the NB AP (e.g., UWB AP present=1), the delta T field may indicate the remaining time (Delta T) in RSTU units from the start of the current packet (current NB AP) to the start of the next UWB AP.

For example, if the UWB AP present field is set to the first value indicating that there is no UWB AP following the NB AP (e.g., UWB AP present=0), and the AP type field is set to the second value indicating that the type of the NB AP is a compressed coordination NB AP type (e.g., AP Type=1), the delta T field may indicate the remaining time in RSTU units from the start of the current packet (current NB AP) to the start of the active period (or active round). As an embodiment, the active period may include one or more active rounds, but the disclosure is not limited thereto.

For example, if the UWB AP present field is set to the first value indicating that there is no UWB AP following the NB AP (e.g., UWB AP present=0), and the AP type field is set to the first value indicating that the type of the NB AP is the coordination NB AP type (e.g., AP Type=0), the delta T field is not present.

The UWB channel field may indicate different information according to the value of the UWB AP present field.

For example, if the UWB AP present field is set to the second value indicating that the UWB AP follows the NB AP (e.g., UWB AP present=1), the UWB channel field may indicate the number of the UWB channel where the UWB AP occurs after Delta T.

For example, if the UWB AP present field is set to the first value indicating that there is no UWB AP following the NB AP (e.g., UWB AP present=0), and the AP type field is set to the second value indicating that the type of the NB AP is a compressed coordination NB AP type (e.g., AP Type=1), the UWB channel field may indicate the number of the UWB channel where the UWB session occurs after delta T.

For example, if the UWB AP present field is set to the first value indicating that there is no UWB AP following the NB AP (e.g., UWB AP present=0), and the AP type field is set to the first value indicating that the type of the NB AP is the coordination NB AP type (e.g., AP Type=0), the UWB channel field is not present.

The preamble code field may indicate different information according to the value of the UWB AP present field.

For example, if the UWB AP present field is set to the second value indicating that the UWB AP follows the NB AP (e.g., UWB AP present=1), the preamble code field may indicate the preamble code used by the UWB AP.

For example, if the UWB AP present field is set to the first value indicating that there is no UWB AP following the NB AP (e.g., UWB AP present=0), and the AP type field is set to the second value indicating that the type of the NB AP is the compressed coordination NB AP type (e.g., AP Type=1), the preamble code field may indicate the preamble code used by the UWB session.

For example, if the UWB AP present field is set to the first value indicating that there is no UWB AP following the NB AP (e.g., UWB AP present=0), and the AP type field is set to the first value indicating that the type of the NB AP is the coordination NB AP type (e.g., AP Type=0), the preamble code field is not present.

The active period duration field may indicate the duration of the active period (or active round) of the UWB session. As an embodiment, the active period duration field may be included only when the UWB AP present field is set to the first value indicating that there is no UWB AP following the NB AP (e.g., UWB AP present=0), and the AP type field is set to a second value indicating that the type of the NB AP is the compressed coordination NB AP type (e.g., AP Type=1). In the disclosure, the active period duration field may be referred to as an active round duration field.

The above-described delta T field and active period duration field may be used to set/select the start of a new session while avoiding a collision with the existing session.

Table 3 shows an example of information/fields included in the MAC payload included in the UWB AP. The MAC payload of the UWB AP in Table 3 may be referred to as a first UWB AP MAC payload.

[Table 3]

| MAC Payload | | Bits | Bytes | Comments |
|---|---|---|---|---|
| Common Info field | AP Type | 3 | 1 | 0: Coordination UWBAP<br>1:8: RFU (Reserved For Future) |
| | RFU | 5 | | Unused |
| Per-Session Info field 1 | Block Dur | 24 | 3 | In RSTU (Ranging Scheduling Time Unit) |
| | Session CH | 5 | 1 | UWB CH used by session |
| | Hop Mode | 1 | | 0: no hopping: 1: hopping. Hopping sequence NOT required to be k nown to all devices |
| | RFU | 2 | | Unused |
| | Preamble Co de | 8 | 1 | Preamble code used by session |

Referring to Table 3, the MAC payload of the UWB AP may include a common information field and/or at least one per-session info field.

The common information field may include an AP type field.

The AP type field may indicate the type of the UWB AP. The AP type field may be set to the first value (e.g., 0) indicating that the type of the UWB AP is the coordination UWB AP type.

The per-session information field may include information (configuration information) about the corresponding session (UWB session). In an embodiment, the per-session information field may include a block duration field, a session channel field, a hop mode field, and/or a preamble code field.

The block period field may indicate the period of the block (e.g., the ranging block) used by the corresponding session in units of RSTU.

The session channel field may indicate the UWB channel used by the corresponding session.

The hop mode field may indicate whether a hopping mode is used. The hop mode field may be set to one of a first value (e.g., 0) indicating that the hopping mode is not used or a second value (e.g., 1) indicating that the hopping mode is used. As an embodiment, it is not required that the hopping sequence be known to all of the devices.

The preamble code field may indicate the preamble code used by the corresponding session.

Table 4 shows another example of information/fields included in the MAC payload included in the UWB AP. Unlike the MAC payload of the UWB AP in Table 3, the MAC payload of the UWB AP in Table 4 further includes a delta T field in the per-session information field, and instead of not including a block period field, may include a round duration field and a number-of-rounds-in-a-block field. Further, the UWB AP of Table 4 may further include an active round field. The MAC payload of the UWB AP in Table 4 may be referred to as a second UWB AP MAC payload.

[Table 4]

| MAC Payload | | Bits | Bytes | Comments |
|---|---|---|---|---|
| Common Info f ield | AP Type | 3 | 1 | 0: Coordination UWB AP<br>1:8: RFU (Reserved For Future) |
| | RFU | 5 | | Unused |
| Per-Session Info field 1 | Delta T | 24 | 3 | Time remaining in RSTU until the start of block |
| | UWB CH | 5 | 1 | UWB CH used by session |
| | Hop Mode | 1 | | 0: no hopping; 1: hopping. Hopping sequence NOT required to be k nown to all devices |
| | RFU | 2 | | Unused |
| | Preamble Co de | 8 | 1 | Preamble code used by session |
| | Round Durati on | 24 | 3 | Round duration in a block of UWB session |
| | Number of Ro unds in a Blo ck | 8 | 1 | In units of rounds |
| | Active Round s | 24 | 3 | Bitmap indicates the index of active rounds |

Referring to Table 4, the MAC payload of the UWB AP may include a common information field and/or at least one per-session information field.

The common information field may include an AP type field.

The AP type field may indicate the type of the UWB AP. The AP type field may be set to the first value (e.g., 0) indicating that the type of the UWB AP is the coordination NP type.

The per-session information field may include information about the corresponding session (UWB session). In an embodiment, the per-session information field may include a delta T field, a UWB channel field, a hop mode field, a preamble code field, a round period field, and/or a number-of-rounds-in-a-block field. The per-session information field may further include an active round field.

The delta T field may indicate the remaining time in RSTU units from the start of the current packet (current UWB AP) to the start of the block (raining block). Here, the block may be a block used by the corresponding session. The new RAN (e.g., RAN2 of FIG. 15) may avoid collision with the existing RAN (e.g., RAN1 of FIG. 15) even when multiple rounds are used in the per-session block based on the delta T field.

The UWB channel field may indicate a UWB channel used by the corresponding session.

The hop mode field may indicate whether the hopping mode is used. The hop mode field may be set to one of a first value (e.g., 0) indicating that the hopping mode is not used or a second value (e.g., 1) indicating that the hopping mode is used. As an embodiment, it is not required that the hopping sequence be known to all of the devices.

The preamble code field may indicate the preamble code used by the corresponding session.

The round duration field may indicate the period of the round (raining round) in the block of the corresponding session (UWB session).

The number-of-rounds-in-a-block field may indicate the number of rounds in the block in units of rounds.

The round duration field and the number-of-rounds-in-a-block field may be used to calculate a block duration. The calculation of the block duration based on the round duration field and the number-of-rounds-in-a-block field may be based on Equation 1 below.

[Equation 1]

$$\text{Round Duration} * \text{Number of Rounds in a Block} = \text{Block Duration}$$

The active round field may include the bitmap indicating the index of the active round(s). As an embodiment, the active round field may include the bitmap indicating the index of active round(s) of the corresponding session. Accordingly, the active ranging round(s) used by the corresponding session may be identified.

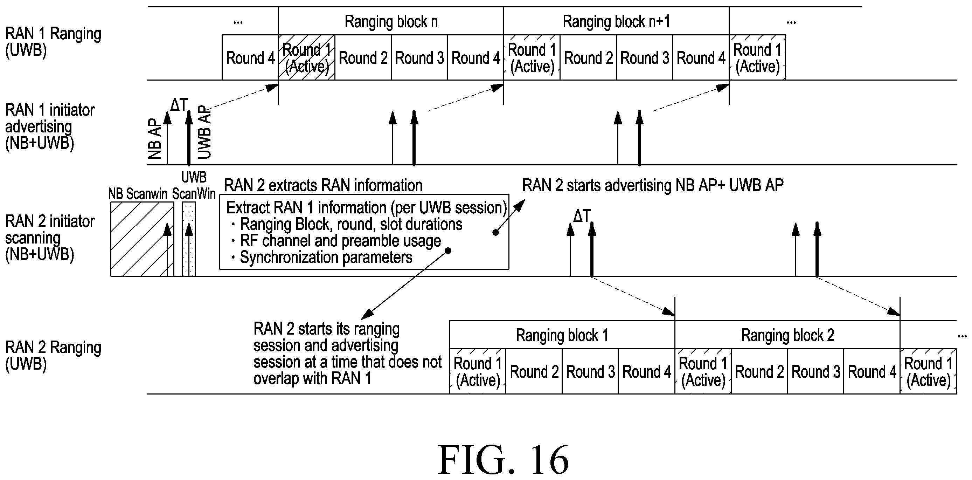

FIG. 16 illustrates an example of a UWB channel coordination method according to an embodiment of the disclosure.

Referring to FIG. 16, the initiator of RAN1 (RAN1 initiator) (e.g., the first UWB device 1501) of RAN1 may transmit or broadcast an NB AP (acquisition packet) through the NB channel (e.g., NB advertisement channel). As an embodiment, the NB AP may be transmitted at the time when the NB advertisement message of FIGS. 7 to 14 is transmitted.

As an embodiment, the NB AP may provide information about the UWB AP. According to an embodiment, the NB AP may include information included in the MAC payload of Table 1 or Table 2. Further, the NB AP may further include the whole or part of the information included in the NB advertisement message/packet described above in FIGS. 1 to 14.

The initiator of RAN 2 (RAN 2 initiator) (e.g., the third UWB device 1503 of FIG. 15) may scan the NB channel to receive or obtain the NB AP. As an embodiment, the RAN 2 initiator may obtain the NB AP in a preset NB scan window.

The RAN 2 initiator may receive or obtain a UWB AP by scanning a UWB channel (e.g., a UWB advertisement channel) based on information included in the NB AP. For example, the RAN 2 initiator may receive the UWB AP based on the delta T field included in the NB AP. The RAN 2 initiator may obtain the UWB AP in a preset UWB scan window. The UWB AP may include information included in the payload of Table 3 or Table 4. Further, the UWB AP may further include the whole or part of the information included in the additional NB advertisement message, connection request message, and/or connection confirmation message described above in FIGS. 1 to 14. The RAN 2 initiator may obtain RAN1 information for each UWB session from the UWB AP. As an embodiment, the RAN1 information for each UWB session may include information about the ranging block duration, the ranging round duration, the ranging slot duration, the RF channel (UWB channel), the preamble use (e.g., the preamble code), and/or the synchronization parameter(s) for the corresponding session.

The RAN 2 initiator may establish and start its own ranging session and advertising session at a time that does not overlap the RAN1 based on the RAN1 information for each UWB session. The RAN 2 initiator may establish a session as a controller.

For example, the RAN 2 initiator may start advertising the NB AP and the UWB AP at the time that does not overlap RAN1. For example, as illustrated in FIG. 16, the RAN 2 initiator may advertise its NB AP and UWB AP in the period corresponding to ranging round 2 rather than the active round in the ranging block of RAN1. According to an embodiment, the NB AP may include information included in the MAC payload of Table 1 or Table 2. Further, the NB AP may further include the whole or part of the information included in the NB advertisement message/packet described above in FIGS. 1 to 14. As an embodiment, the UWB AP may include information included in the payload of Table 3 or Table 4. Further, the UWB AP may further include the whole or part of the information included in the additional NB advertisement message, connection request message, and/or connection confirmation message described above in FIGS. 1 to 14.

For example, the RAN 2 initiator may perform UWB ranging at a time that does not overlap RAN1. For example, as illustrated in FIG. 16, the RAN 2 initiator may set the ranging round corresponding to the ranging round 4, not the active round in the ranging block of RAN1, to ranging round 1 which is its own active round.

As such, a RAN (stating RAN) which starts a new session may minimize conflicts with the existing RAN by establishing its own ranging session and advertising session based on the per-session RAN information included in the UWB AP. For example, the starting RAN may avoid conflicts with the existing RAN by selecting a value different from the value of the parameter (field) in the per-session information field included in the UWB AP.

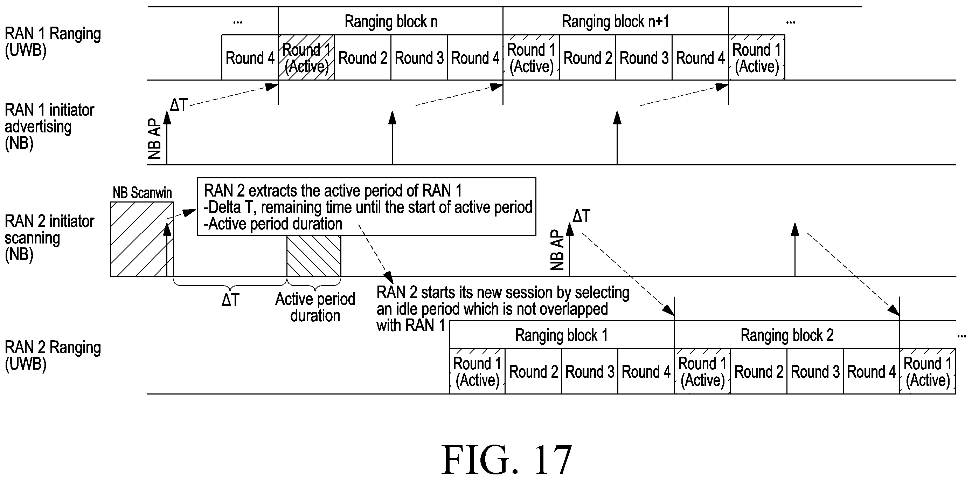

In the above-described embodiment of FIG. 16, the case where the UWB AP is used together with the NB AP has been described as an example. However, according to the embodiment, the UWB AP may not be used with the NB AP. For example, the UWB AP may not be supported in the RAN. Hereinafter, an example of a UWB channel coordination method when the UWB AP does not follow the NB AP is described with reference to FIG. 17.

FIG. 17 illustrates an example of a UWB channel coordination method according to an embodiment of the disclosure.

In the embodiment of FIG. 17, unlike the embodiment of FIG. 16, the UWB AP is not used in the RAN. Therefore, the UWB AP present field in the NB AP may be set to the first value (e.g., 0) indicating that there is no UWB AP following the NB AP.

Referring to FIG. 17, the initiator of RAN1 (RAN1 initiator) (e.g., the first UWB device 1501) of RAN1 may transmit or broadcast an NB AP (acquisition packet) through the NB channel (e.g., NB advertisement channel). As an embodiment, the NB AP may be transmitted at the time when the NB advertisement message of FIGS. 7 to 14 is transmitted.

As an embodiment, the NB AP may provide information about the UWB session. According to an embodiment, the NB AP may include information included in the MAC payload of Table 2. Further, the NB AP may further include the whole or part of the information included in the NB advertisement message/packet described above in FIGS. 1 to 14. Further, the NB AP may further include the whole or part of the information included in the per-session field of Table 3 and/or Table 4.

The initiator of RAN 2 (RAN 2 initiator) (e.g., the third UWB device 1503 of FIG. 15) may scan the NB channel to receive or obtain the NB AP. As an embodiment, the RAN 2 initiator may obtain the NB AP in a preset NB scan window.

The RAN 2 initiator may identify the active period (or active round) of the RAN (e.g., RAN1) in which the NB AP is transmitted based on the information included in the NB AP. As an embodiment, the RAN 2 initiator may identify the active section (or active round) of RAN1 based on the value of the delta T field and the active section duration field (active round duration field) included in the NB AP.

The RAN 2 initiator may start its own session in a period that does not overlap RAN1.

For example, the RAN 2 initiator may start advertising the NB AP in a period that does not overlap RAN1. For example, as illustrated in FIG. 17, the RAN 2 initiator may advertise its NB AP in the period corresponding to ranging round 2 rather than the active round in the ranging block of RAN1. The NB AP of the RAN 2 initiator may include information about the session established by the RAN 2 initiator. According to an embodiment, the NB AP may include information included in the MAC payload of Table 2. Further, the NB AP may further include the whole or part of the information included in the NB advertisement message/packet described above in FIGS. 1 to 14.

For example, the RAN 2 initiator may perform UWB ranging in a period that does not overlap the RAN1. For example, as illustrated in FIG. 17, the RAN 2 initiator may set the ranging round corresponding to the ranging round 4, not the active round in the ranging block of RAN1, to ranging round 1 which is its own active round.

As such, a RAN (stating RAN) which starts a new session may minimize conflicts with the existing RAN by establishing its own ranging session and advertising session based on the per-session RAN information included in the NB AP. For example, the starting RAN may avoid conflicts with the existing RAN by selecting a value different from the value of the parameter (field) in the per-session information field included in the UWB AP.

Meanwhile, the NB AP message may be used for coordination by the initiator. According to an embodiment, the NB AP message may be implemented as the NB AP compact message illustrated in Table 5.

[Table 5] NB AP compact message

| Octets: 3 | 1 | Variable |
|---|---|---|
| RPA hash /ADV Address | Message Control | Message Content |

Referring to Table 5, the NB AP compact message may include 3 octets of resolvable private address (RPA) hash/advertising (ADV) address field, 1 octet of message control field, and a variable octet of message content field. According to an embodiment, the RPA hash field may be calculated using an identity resolution key (IRK) and the initiator's RPA_prand. The initiator may generate and/or transfer a 3-octet output RPA_prand of CSPRNG in the first message of all the ranging blocks (in the POLL message).

According to an embodiment, if the message control field is a preset value (e.g., 0), the message content field may be configured as illustrated in Table 6.

[Table 6] Message Content field in NB AP when message control is zero

| Bit : 3 | 5 | 1 | 3 | 4 | 0/16 | 0/16 | 0/5 | 0/3 | 0/8 | Variable |
|---|---|---|---|---|---|---|---|---|---|---|
| NB AP Type | Reserved | UWB AP Present | Type of UWB Per-Session Info | Reserved | Next NB AP | Delta T | UWB Channel | Reserved | Preamble Code | UWB Per-Session Info(s) |
| Common Info | | | | | | UWB AP Info | | | | UWB Session Info |

Referring to Table 6, the message content field may include a common information field, a UWB AP information field, and a UWB session information field. According to an embodiment, the common information field may be configured in a fixed order. According to an embodiment, some fields may not be included in all the frames.

The NB AP Type field included in the common information field may indicate whether the transmission of the NB AP is periodic or aperiodic. The NB AP type field may be configured as one of the values designated in Table 7.

[Table 7] Values of the NB AP Type field

| The NB AP Type field value | Meaning |
|---|---|
| 0 | Periodic coordination |
| 1 | Aperiodic coordination |
| 2-7 | Reserved |

According to an embodiment, if the UWB AP present field included in the common information field is 1, if the NB AP type field is 0 or 1, it may indicate that the UWB AP Info field is present. If the UWB AP present field is 0, when the NB AP type field is 0 or 1, it may indicate that the UWB AP Info field is not present.

The type of UWB per-session info field may designate the format of the session information field per UWB to be used. The type of UWB per-session info field may include at least one of the values designated in Table 8.

[Table 8] Values of the Type of UWB Per-Session Info field

| Type of UWB Per-Session Info field value | Meaning |
|---|---|
| 0 | UWB Per-Session Info Field is not present |
| 1 | UWB Per-Session Info #1, as per specified in Table 9 |
| 2 | UWB Per-Session Info #2, as per specified in Table 10 |
| 3 | UWB Per-Session Info #3, as per specified in Table 11 |

Referring to Table 8, if the type of UWB per-session info field is configured as 0, the type of UWB per-session info field may not be present. If the type of UWB per-session info field is configured as 1, the type of UWB per-session info field may be configured as illustrated in Table 9. If the type of UWB per-session info field is configured as 2, the type of UWB per-session info field may be configured as illustrated in Table 10. If the type of UWB per-session info field is configured as 3, the type of UWB per-session info field may be configured as illustrated in Table 11.

The details of Tables 9 to 11 in Table 8 are described below.

The next NB AP field included in the common info field of Table 6 may represent the remaining time until the next NB AP starts in RSTU units. When the value of the NB AP type field is 0, the next NB AP field may not are present.

The UWB AP information (UWB AP info) field of Table 6 may be represented in a fixed order. According to an embodiment, some fields in the UWB AP information field may not be included in all of the frames. When the UWB AP Information field is provided, the initiator may transmit the UWB AP after the NB AP. Otherwise, the Initiator may not transmit the UWB AP.

The delta T field in the UWB AP Information field may indicate, in RSTU units, the remaining time until the next UWB AP is started from the start of the current packet.

The UWB channel field in the UWB AP Information field may indicate the UWB channel number where the UWB AP occurs after delta T. According to an embodiment, in the UWB channel, a high rate pulse repetition frequency (HRP) UWB PHY may be configured based on Table 9, and a low rate pulse repetition frequency (LRP) UWB PHY may be defined based on Table 10.

[Table 9]

| Channel number | Center frequency (MHz) | HRP UWB band/mandatory |
|---|---|---|
| 0 | 499.2 | Sub-gigahertz |
| 1 | 3404.4 | Low band |
| 2 | 3993.6 | |
| 3 | 4492.8 | |
| 4 | 3993.6 | |
| 5 | 6489.6 | High band |
| 6 | 6988.8 | |
| 7 | 6489.6 | |
| 8 | 7488.0 | |
| 9 | 7987.2 | |
| 10 | 8486.4 | |
| 11 | 7987.2 | |
| 12 | 8985.6 | |
| 13 | 9484.8 | |
| 14 | 9984.0 | |
| 15 | 9484.8 | |

[Table 10]

| Channel number | Center frequency (MHz) |
|---|---|
| 0 | 6489.6 |
| 1 | 6988.8 |
| 2 | 7987.2 |

The preamble code field in the UWB AP information field may indicate the preamble code used by the UWB AP. According to an embodiment, the preamble code may be defined based on Tables 11, 12, and 13.

[Table 11] Optional length 127 ternary code

| Code index | Code sequence | Channel number[a] |
|---|---|---|
| 9 | + 0 0 + 0 0 0 – 0 – – 0 0 – – + 0 + 0 + 0 0 – + – + + 0 + 0 0 0 0 + + – 0 0 0 + 0 0 – 0 0 – – 0 – + 0 + 0 – – 0 – + + + 0 + + 0 0 0 + – 0 + 0 0 – 0 + + – 0 + + + 0 0 – + 0 0 + 0 + 0 – 0 + + – + – – + 0 0 0 0 0 0 + 0 0 0 0 0 – + 0 0 0 0 – 0 – 0 0 0 – – + | 0–3, 5, 6, 8–10, 12–14 |
| 10 | + + 0 0 + 0 – + 0 0 + 0 0 + 0 0 0 0 0 0 – 0 0 0 – 0 0 – – 0 0 0 – 0 + – + 0 – 0 + – 0 – + 0 0 0 + – 0 0 + + – + 0 + – 0 + 0 0 0 0 – 0 – 0 – 0 + + – – + 0 + 0 0 + 0 + 0 0 0 – + 0 + + + 0 0 0 – – – – + + + 0 0 0 0 + + + 0 – – | 0–3, 5, 6, 8–10, 12–14 |
| 11 | – + – 0 0 0 0 + 0 0 – – 0 0 0 0 0 – 0 + 0 + 0 + – 0 + 0 0 + 0 0 + 0 – 0 0 – – + + + 0 0 + 0 0 0 – + 0 + 0 – 0 0 0 0 + + + + – + 0 + – – 0 – 0 + + – – 0 – 0 0 0 + 0 – + 0 0 + 0 + – – – – 0 0 0 – 0 0 0 0 0 0 – + 0 0 + – 0 + + 0 0 0 + – 0 0 + + – 0 – 0 | 0–3, 5, 6, 8–10, 12–14 |
| 12 | – + 0 + + 0 0 0 0 0 0 – 0 + 0 – + 0 – – – – + – + + 0 0 – + 0 + + 0 + 0 + 0 + 0 0 0 – 0 0 – 0 0 – + 0 0 + – – + 0 0 0 – + – 0 – + + 0 – 0 + + + + 0 – 0 0 – 0 + + 0 0 + 0 + 0 + 0 0 + + – 0 0 + 0 0 0 + – 0 0 0 – 0 – – + 0 0 0 0 – 0 0 0 0 – – – 0 + 0 0 0 0 0 + – – | 0–3, 5, 6, 8–10, 12–14 |
| 13 | + 0 0 0 – – 0 0 0 0 – – + + 0 – + + + + 0 – 0 + + 0 + 0 – 0 0 – – 0 + + 0 0 + + – 0 + + 0 + – + 0 – 0 0 + 0 0 – – 0 0 – + – 0 0 0 0 – 0 + + – 0 0 0 0 0 0 – + – 0 – 0 0 0 0 0 0 – 0 0 – + – + + – + 0 0 0 – 0 + 0 + 0 + + + – 0 0 – – – 0 0 + 0 + 0 0 0 | 0–15; DPS only |
| 14 | + 0 0 0 + + 0 – 0 + 0 – 0 0 + – 0 – + 0 – 0 0 + 0 + 0 0 0 0 + 0 + – 0 0 0 0 + + 0 0 + 0 + + + + + – + 0 – 0 + – 0 – – + 0 + + – – 0 0 0 – – – – 0 + 0 0 0 + 0 + 0 – + – 0 0 0 0 0 0 + – + – 0 – – – 0 0 + + 0 0 0 – 0 0 + 0 0 + + – 0 0 – – – + + – 0 0 – 0 0 0 0 0 | 0–15; DPS only |

[Table 12] Optional length 127 ternary codes

| Code index | Code sequence | Channel number[a] |
|---|---|---|
| 15 | 0 + – 0 0 + 0 – 0 0 0 – + + 0 0 0 0 – – – + + 0 0 0 + 0 + – 0 – + 0 0 – + 0 0 0 – – 0 – 0 0 – – 0 – – + + + – + 0 – + + 0 0 + – + + 0 + 0 0 0 0 0 + 0 – 0 + + + – 0 0 + 0 0 + 0 0 0 – 0 0 0 0 + 0 0 – – – + 0 + + 0 + 0 + 0 – 0 0 – 0 – + – 0 + 0 + + 0 0 0 0 0 | 0–15; DPS only |
| 16 | + + 0 0 0 0 + 0 0 0 + 0 0 + – – 0 + – + + 0 – 0 0 0 – – 0 0 + – 0 + 0 0 + + 0 0 0 + + + 0 0 + 0 + 0 – 0 – + – 0 – 0 + 0 0 + 0 0 + 0 + + – – – – – + 0 0 + + + – – + – 0 + 0 – – – + 0 0 0 0 0 0 – 0 – 0 0 0 0 – + 0 – – 0 0 + 0 0 0 0 0 + – – + + 0 0 0 – 0 – + 0 + 0 | 0–15; DPS only |
| 17 | + – – 0 0 0 – 0 – 0 0 0 0 + – 0 0 0 0 0 + 0 0 0 0 0 0 + – – + – + + 0 – 0 + 0 + 0 0 + – 0 0 + + + 0 – + + 0 – + 0 – 0 0 + 0 – + 0 0 0 + + 0 + + + – 0 – – 0 + 0 + – 0 – – – 0 0 – 0 0 – 0 0 + 0 0 0 – + + 0 0 0 0 + 0 + + – + – – 0 0 + 0 + 0 + – – – 0 0 – – 0 – 0 0 0 + 0 0 + | 4, 7, 11, 15 |
| 18 | – – – 0 + + + 0 0 0 0 + + + – – – – 0 0 0 + + + + 0 + – 0 0 0 + 0 + 0 0 + 0 + 0 + – + + – 0 – 0 – 0 – 0 0 0 0 + – 0 – + 0 + – + + 0 0 + – – 0 0 + – 0 – 0 + + 0 0 0 – + 0 0 0 0 0 + 0 0 + 0 0 – + 0 0 + + + 0 – 0 0 0 – – 0 0 – 0 0 0 – 0 0 0 0 0 0 + 0 0 + 0 0 + – 0 + 0 0 + + | 4, 7, 11, 15 |
| 19 | – 0 – + + 0 0 – + + 0 0 0 + + 0 – + 0 0 + – 0 0 0 0 0 0 – 0 0 0 – – – – + 0 + 0 0 + – 0 + 0 0 0 – 0 – – + + 0 – + 0 – 0 – – + 0 + – + + + + + 0 0 0 0 – 0 + 0 + – 0 0 0 + 0 0 + + + – 0 0 – 0 + 0 0 + 0 0 + 0 – + 0 + 0 + 0 – 0 0 0 0 0 – – 0 0 + 0 0 0 0 0 – + – 0 | 4, 7, 11, 15 |
| 20 | – – + 0 0 0 0 0 + 0 – – 0 0 0 0 – 0 0 0 0 – 0 0 0 + – – 0 – 0 0 0 – + 0 0 0 + 0 0 + 0 0 – + + 0 0 + 0 + 0 0 + + 0 – 0 0 – 0 + + + + 0 – 0 + + – – + 0 0 + – 0 0 – 0 0 – 0 0 0 + 0 + 0 + 0 + 0 + + 0 – 0 0 + + – + – – – 0 + – 0 + 0 – 0 0 0 0 0 0 + + 0 + – – | 4, 7, 11, 15 |
| 21 | + 0 + 0 0 – – 0 0 – + + + 0 + 0 + 0 – 0 0 0 + – + + – + – 0 0 – 0 0 0 0 0 0 – 0 – + 0 0 0 0 – + + 0 – 0 0 0 0 + 0 0 + 0 0 – + – – 0 0 0 – – 0 – 0 0 + 0 0 + – – + 0 + 0 + 0 – + + + 0 0 + + 0 + – 0 0 – 0 + 0 + + 0 – 0 + + + + – 0 + + – – 0 + + – – 0 0 0 0 – – – 0 0 0 + 0 0 0 | 0–15; DPS only |
| 22 | 0 – 0 0 – + + – – 0 0 – + + 0 0 + 0 0 – 0 0 0 + + 0 0 – – – 0 – + – + 0 0 0 0 0 0 – + – 0 + 0 + 0 0 0 + 0 – – – 0 0 0 – – – + + 0 + – – 0 – + 0 – 0 + – – + + + + + 0 + 0 0 + + 0 0 0 0 – + 0 + 0 0 0 0 + 0 + 0 0 – 0 + – 0 – – + 0 0 – 0 + 0 – 0 + + 0 0 0 + 0 0 0 0 | 0–15; DPS only |
| 23 | 0 0 0 + + + 0 + 0 – + – 0 – 0 0 – 0 + 0 + 0 + + 0 + + – – 0 0 + 0 0 0 0 – 0 0 0 + 0 0 + 0 0 – + + + 0 – 0 + 0 0 0 0 0 + 0 + + – + 0 0 + + – 0 0 + + – + – + + + – + 0 + 0 0 + + 0 0 0 0 – + 0 + + – 0 – + 0 + 0 0 0 + + – + – – – 0 0 0 0 + + – 0 0 0 – 0 + 0 0 – + 0 0 0 | 0–15; DPS only |
| 24 | + 0 + – 0 – 0 0 0 + + – + – + 0 0 0 0 0 + 0 0 – – 0 + – 0 0 0 0 – 0 – 0 0 0 0 0 0 + – – 0 – + 0 + 0 – – + + 0 0 + – – – – + + 0 + 0 0 + 0 0 + 0 – 0 – + – 0 – 0 + 0 + 0 0 + + + + 0 0 0 0 + + 0 0 + 0 – + 0 0 0 – 0 0 0 – 0 0 + + – – + 0 – – – + 0 0 + 0 0 0 + 0 0 0 + 0 0 + 0 | 0–15; DPS only |
| [a] Note that codes indexed 9 through 13 may also be used for HRP UWB channels 4, 7, 11, and 15 (i.e., channels whose bandwidth is wider than 500 MHz) if interchannel communication is desired. | | |

[Table 13] Length 91 ternary codes for the HRP-ERDEV

| Code index | Code sequence |
|---|---|
| 25 | – 0 + + + – – + – + – + + + + – + – – – + + – – + + + + + + – + + – + 0 0 + – – + 0 – – + 0 + + + + + – – – + + + – – 0 – – 0 + – + – – – – 0 – + – + – + 0 + – – + + – + – + + + 0 |
| 26 | + + 0 + – + – – – + + + + + – + – + + – + – – + + – – – + – 0 + + + 0 – + + + + – + 0 + 0 – – 0 + – + + – + + + + + + – – – + – + + 0 0 + + + – – 0 + – – – – – + – 0 + – + – – + – – – |
| 27 | + + + – – + + + – – – + – – 0 – – + – – 0 + + – + – + 0 – + + + + + + + + + + + + – – + – – + + – – + + 0 + + – + – – + – – – + – – + + + – – – 0 – + + + – 0 + 0 0 – – – + + – + – – 0 – + + 0 |
| 28 | + + + + + – – + + + – + + – – – – + + – – – + – + – – 0 + + – – – + – + 0 + – – – – – + 0 + + + + – – + – – + – + – – + – + + + + + 0 – 0 – + + 0 0 + – + + + – + + – + 0 – + 0 – – + – – – + + + 0 + |
| 29 | + – 0 – – – + – – + + – – 0 + + 0 0 + + – + + – – – – – + + + + + + – 0 + – – + – – + – + – – – + – + + + + + + – + – + + + 0 + – + – 0 – 0 – + + – – – + 0 – – – + + 0 – + – + – + + – |
| 30 | – + + 0 – – 0 + + – 0 0 – – + + – + + – + – + – – – + + + + + – – – – + + + – – 0 + – + – + 0 + + + + + – + + + – + + + – + – + 0 – – – – – – + + – + + – + 0 – – – – + – + – 0 + 0 + – + + + – |
| 31 | – + – + + 0 + + + – – + + – 0 + + 0 0 – – + + – – + + + – + – – – – – 0 + + + – + + + + + + + – – + – + + – – – – + – – + – + 0 – + – – – 0 + 0 + – + + – + + 0 + – + – – – 0 + + + + + + |
| 32 | – + + + + + + + + + + + – – – + – + + – – – + + 0 0 – + – + 0 – + – 0 – + + – – + + + – + + + 0 – – – 0 + + – + – – + – 0 – – – – + + – 0 – – – – + + + + – + – 0 + 0 – + – + + – + + – – – + – |

The UWB session information field of Table 6 may indicate UWB channel usage information per UWB session using the UWB per-session info(s). When the UWB per-session info(s) field is included in both the NB AP and the UWB AP, it may be identified whether the order of session information per UWB is the same.

If the type of UWB per-session info field is configured as 1, the type of UWB per-session info field may be configured as illustrated in Table 14.

[Table 14] UWB Per-Session Info #1 when Type of UWB Per-Session Info field value is one

| **Bits: 24** | **5** | **1** | **2** | **8** |
|---|---|---|---|---|
| Block Duration | UWB Channel | Hop Mode | Reserved | Preamble Code |

The block duration field may be designated as an unsigned integer in a unit of RSTU for designating the block duration.

The UWB channel field may indicate a UWB channel number used in the UWB session. According to an embodiment, in the UWB channel, the HRP UWB PHY may be configured based on Table 9, and the LRP UWB PHY may be defined based on Table 10.

The hop mode field may designate the hop mode of the UWB session block. According to an embodiment, if the hop mode field is 0, it may indicate that there is no hopping, and if the hop mode field is 1, it may indicate that there is hopping.

The preamble code field may indicate a preamble code used in the UWB session. According to an embodiment, the preamble code may be defined based on Tables 11, 12, and 13.

If the type of UWB per-session info field is configured as 2, the type of UWB per-session info field may be configured as illustrated in Table 15.

[Table 15] UWB Per-Session Info #2 when Type of UWB Per-Session Info field value is two

| **Bits: 24** | **5** | **3** | **8** | **24** |
|---|---|---|---|---|
| Delta T | UWB Channel | Reserved | Preamble Code | Active Period Duration |

The delta T field may represent, in RSTU units, the remaining time from the start of the current packet to the start of the active period of the block.

The UWB channel field may indicate a UWB channel number used in the UWB session. According to an embodiment, in the UWB channel, the HRP UWB PHY may be configured based on Table 9, and the LRP UWB PHY may be defined based on Table 10.

The preamble code field may indicate a preamble code used in the UWB session. According to an embodiment, the preamble code may be defined based on Tables 11, 12, and 13.

The active period duration field may indicate the duration of the active period in the UWB session block.

If the type of UWB per-session info field is configured as 3, the type of UWB per-session info field may be configured as illustrated in Table 16.

[Table 16]

| Bits: 24 | 5 | 1 | 2 | 8 | 24 | 8 | 24 |
|---|---|---|---|---|---|---|---|
| Delta T | UWB Channel | Hop Mode | Reserved | Preamble Code | Round Duration | Number of Rounds | Active Rounds |

The delta T field may represent, in RSTU units, the remaining time from the start of the current packet to the start of the block.

The UWB channel field may indicate a UWB channel number used in the UWB session. According to an embodiment, in the UWB channel, the HRP UWB PHY may be configured based on Table 9, and the LRP UWB PHY may be defined based on Table 10.

The hop mode field may designate the hop mode of the UWB session block. According to an embodiment, if the hop mode field is 0, it may indicate that there is no hopping, and if the hop mode field is 1, it may indicate that there is hopping.

The preamble code field may indicate a preamble code used in the UWB session. According to an embodiment, the preamble code may be defined based on Tables 11, 12, and 13.

The round duration field may be an unsigned integer designating the round duration in RSTU.

The number of rounds field may be an unsigned integer designating the number of rounds of the UWB session block.

The active rounds field may include a binary bitmap string. Each bit may be mapped to the round of the UWB session block. Each bit may be set to 1 to indicate activation or 0 otherwise.

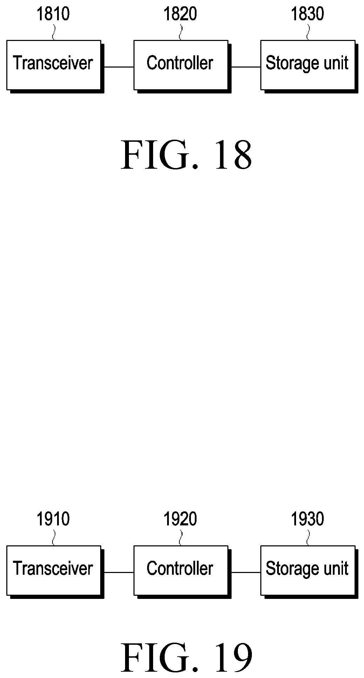

FIG. 18 illustrates a structure of a first UWB device according to an embodiment of the disclosure.

In the embodiment of FIG. 18, the first UWB device may correspond to the UWB device of FIG. 1, include a UWB device, or may be an electronic device that may include a portion of a UWB device. For example, the first UWB device may be a UWB device serving as a controller/advertiser.

Referring to FIG. 18, the first UWB device may include a transceiver 1810, a controller 1820, and a storage unit 1830. In the disclosure, the controller may be defined as a circuit, an application-specific integrated circuit, or at least one processor.

The transceiver 1810 may transmit and receive signals to/from another entity. The transceiver 1810 may transmit/receive data to/from another device through, e.g., at least one NB channel and/or at least one UWB channel.

In an embodiment, the transceiver 1810 may include a first transceiver supporting the NB channel and a second transceiver supporting the UWB channel. In another embodiment, the transceiver 1820 may include a transceiver supporting both the NB channel and the UWB channel.

The controller 1820 may control the overall operation of the electronic device according to an embodiment. For example, the controller 1820 may control inter-block signal flow to perform the operations according to the above-described flowchart. Specifically, the controller 1820 may control the operations of the first UWB device described above with reference to FIGS. 1 to 16.

For example, the controller 1820 may broadcast at least one advertisement message providing information about the UWB channel used by the first UWB device, through the NB channel.

The storage unit 1830 may store at least one of information transmitted/received via the transceiver 1810 and information generated via the controller 1820. For example, the storage unit 1830 may store information and data necessary for the method described above with reference to FIGS. 1 to 17.

The first UWB device or the controller 1820 may generate an NB AP that provides information about a first UWB session used by the first UWB device.

The first UWB device or controller 1820 may broadcast the NB AP through the NB channel. According to an embodiment, the NB AP may be used to establish a second UWB session by a second UWB device.

According to an embodiment, the NB AP may include a common information field including an AP type field indicating the type of the NB AP and a UWB AP present field indicating whether there is a UWB AP.

According to an embodiment, when the AP type field indicates that the type of the NB AP is a coordination NB AP type, the NB AP may further include a specific-session information field for the first UWB session, and the per-session information field may include information about an active round of the first UWB session.

According to an embodiment, when the UWB AP present field indicates that the UWB AP is not present, and the AP type field indicates that the type of the NB AP is a compressed coordination NB AP type, the NB AP may include a delta T field, a UWB channel field, and a preamble code field. The delta T field may indicate a remaining time from a start of the NB AP to a start of an active period for the first UWB session, the UWB channel field may indicate a number of a UWB channel where the first UWB session occurs after the remaining time, and the preamble code field may indicate a preamble code used by the first UWB session.

According to an embodiment, when the UWB AP present field indicates that the UWB AP follows the NB AP, the NB AP may include a delta T field, a UWB channel field, and a preamble code field. The delta T field may indicate a remaining time from a start of the NB AP to a start of the UWB AP, the UWB channel field may indicate a UWB channel where the UWB AP is generated after the remaining time, and the preamble code field may indicate a preamble code used by the UWB AP.

According to an embodiment, when the UWB AP present field indicates that the UWB AP is not present, and the AP type field indicates that the type of the NB AP is a compressed coordination NB AP type, the NB AP may further include an active period duration field, and the active period duration field indicates a duration of an active period of the first UWB session.

FIG. 19 illustrates a structure of a second UWB device according to an embodiment of the disclosure.

In the embodiment of FIG. 19, the first UWB device may correspond to the UWB device of FIG. 2, include a UWB device, or may be an electronic device that may include a portion of a UWB device. For example, the second UWB device may be a UWB device serving as a controller/scanner or a controlee/scanner.

Referring to FIG. 19, the second UWB device may include a transceiver 1910, a controller 1920, and a storage unit 1930. In the disclosure, the controller may be defined as a circuit, an application-specific integrated circuit, or at least one processor.

The transceiver 1910 may transmit and receive signals to/from another entity. The transceiver 1910 may transmit/receive data to/from another device through, e.g., an NB channel and/or a UWB channel.

In an embodiment, the transceiver 1910 may include a first transceiver supporting the NB channel and a second transceiver supporting the UWB channel. In another embodiment, the transceiver 1820 may include a transceiver supporting both at least one NB channel and at least one UWB channel.

The controller 1920 may control the overall operation of the electronic device according to an embodiment. For example, the controller 1920 may control inter-block signal flow to perform the operations according to the above-described flowchart. Specifically, the controller 1920 may control the operations of the second UWB device described above with reference to FIGS. 1 to 17.

The storage unit 1930 may store at least one of information transmitted/received via the transceiver 1910 and information generated via the controller 1920. For example, the storage unit 1930 may store information and data necessary for the method described above with reference to FIGS. 1 to 17.

The second UWB device or the controller 1920 may receive, from a first UWB device through an NB channel, an NB AP that provides information about a first UWB session used by the first UWB device.

The second UWB device or the controller 1920 may establish a second UWB session based on the NB AP. According to an embodiment, the second UWB device or the controller 1920 may determine the start time of the second UWB session based on the NB AP so as not to collide with the first UWB session.

According to an embodiment, the NB AP may include a common information field including an AP type field indicating the type of the NB AP and a UWB AP present field indicating whether there is a UWB AP.

According to an embodiment, when the AP type field indicates that the type of the NB AP is a coordination NB AP type, the NB AP may further include a specific-session information field for the first UWB session, and the per-session information field may include information about an active round of the first UWB session.

According to an embodiment, when the UWB AP present field indicates that the UWB AP is not present, and the AP type field indicates that the type of the NB AP is a compressed coordination NB AP type, the NB AP may include a delta T field, a UWB channel field, and a preamble code field. The delta T field may indicate a remaining time from a start of the NB AP to a start of an active period for the first UWB session, the UWB channel field may indicate a number of a UWB channel where the first UWB session occurs after the remaining time, and the preamble code field may indicate a preamble code used by the first UWB session.

According to an embodiment, when the UWB AP present field indicates that the UWB AP follows the NB AP, the NB AP may include a delta T field, a UWB channel field, and a preamble code field. The delta T field may indicate a remaining time from a start of the NB AP to a start of the UWB AP, the UWB channel field may indicate a UWB channel where the UWB AP is generated after the remaining time, and the preamble code field may indicate a preamble code used by the UWB AP.

According to an embodiment, when the UWB AP present field indicates that the UWB AP is not present, and the AP type field indicates that the type of the NB AP is a compressed coordination NB AP type, the NB AP may further include an active period duration field, and the active period duration field indicates a duration of an active period of the first UWB session.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1.  A method of a first UWB device, the method comprising:

    generating a narrow band (NB) acquisition packet (AP) providing information about a first UWB session used by the first UWB device; and
    broadcasting the NB AP through an NB channel, wherein the NB AP is configured to be used for a second UWB device to establish a second UWB session.

2.  The method of claim 1, wherein the NB AP includes a common information field including an AP type field indicating a type of the NB AP and a UWB AP present field indicating whether a UWB AP is present.

3.  The method of claim 2, wherein based on the AP type field indicating that the type of the NB AP is a coordination NB AP type, the NB AP further includes a specific-session information field for the first UWB session, and wherein the per-session information field includes information about an active round of the first UWB session.

4.  The method of claim 2, wherein based on the UWB AP present field indicating that the UWB AP is not present, and the AP type field indicates that the type of the NB AP is a compressed coordination NB AP type, the NB AP includes a delta T field, a UWB channel field, and a preamble code field, and
    wherein the delta T field indicates a remaining time from a start of the NB AP to a start of an active period for the first UWB session, the UWB channel field indicates a number of a UWB channel where the first UWB session occurs after the remaining time, and the preamble code field indicates a preamble code used by the first UWB session.

5.  The method of claim 2, wherein based on the UWB AP present field indicating that the UWB AP follows the NB AP, the NB AP includes a delta T field, a UWB channel field, and a preamble code field, and
    wherein the delta T field indicates a remaining time from a start of the NB AP to a start of the UWB AP, the UWB channel field indicates a UWB channel where the UWB AP is generated after the remaining time, and the preamble code field indicates a preamble code used by the UWB AP.

6.  The method of claim 2, wherein based on the UWB AP present field indicating that the UWB AP is not present, and the AP type field indicates that the type of the NB AP is a compressed coordination NB AP type, the NB AP further includes an active period duration field, and the active period duration field indicates a duration of an active period of the first UWB session.

7.  A method of a second UWB device, the method comprising:

    receiving, from a first UWB device through a narrow band (NB) channel, a narrow band (NB) acquisition packet (AP) providing information about a first UWB session used by the first UWB device; and
    establishing a second UWB session based on the NB AP.

8.  The method of claim 7, wherein the NB AP includes a common information field including an AP type field indicating a type of the NB AP and a UWB AP present field indicating whether a UWB AP is present.

9.  The method of claim 8, wherein based on the AP type field indicating that the type of the NB AP is a coordination NB AP type, the NB AP further includes a specific-session information field for the first UWB session, and wherein the per-session information field includes information about an active round of the first UWB session.

10. The method of claim 8, wherein based on the UWB AP present field indicating that the UWB AP is not present, and the AP type field indicates that the type of the NB AP is a compressed coordination NB AP type, the NB AP includes a delta T field, a UWB channel field, and a preamble code field, and

wherein the delta T field indicates a remaining time from a start of the NB AP to a start of an active period for the first UWB session, the UWB channel field indicates a number of a UWB channel where the first UWB session occurs after the remaining time, and the preamble code field indicates a preamble code used by the first UWB session.

11. The method of claim 9, wherein based on the UWB AP present field indicating that the UWB AP follows the NB AP, the NB AP includes a delta T field, a UWB channel field, and a preamble code field, and

wherein the delta T field indicates a remaining time from a start of the NB AP to a start of the UWB AP, the UWB channel field indicates a UWB channel where the UWB AP is generated after the remaining time, and the preamble code field indicates a preamble code used by the UWB AP.

12. The method of claim 8, wherein based on the UWB AP present field indicating that the UWB AP is not present, and the AP type field indicates that the type of the NB AP is a compressed coordination NB AP type, the NB AP further includes an active period duration field, and the active period duration field indicates a duration of an active period of the first UWB session.

13. A first UWB device, comprising:

at least one transceiver; and
a controller connected to the at least one transceiver, wherein the controller is configured to:

generate a narrow band (NB) acquisition packet (AP) providing information about a first UWB session used by the first UWB device; and
broadcast the NB AP through an NB channel, wherein the NB AP is configured to be used for a second UWB device to establish a second UWB session.

14. 15. A second UWB device, comprising:

at least one transceiver; and
a controller connected to the at least one transceiver, wherein the controller is configured to:

receive, from a first UWB device through a narrow band (NB) channel, a narrow band (NB) acquisition packet (AP) providing information about a first UWB session used by the first UWB device; and
establish a second UWB session based on the NB AP.

100a

130a

Higher Layer

120a

MAC Layer
(MAC sub-layer)

110a

PHY Layer

# FIG. 1A

EP 4 642 145 A1

100b

First UWB Device

110b

UWB-enabled Application Layer

120b          130b

Framework          UWB Tranceiver

140b

NB Tranceiver

First radio link

Second radio link

200b

Second UWB Device

210b

UWB-enabled Application Layer

230b          220b

UWB Tranceiver          Framework

240b

NB Tranceiver

FIG. 1B

NB procedure ~ 210

UWB procedure ~ 220

# FIG. 2

301

Advertiser

302

Scanner

Advertisement message ~ 310a

# FIG. 3A

301

302

| Advertiser | | Scanner |

Advertisement message
310b

Additional Advertisement message
311b

Connection request message
320b

Connection confirmation message
330b

# FIG. 3B

401

402

| Controller | | Controlee |

Control message
410a

Ranging initiation message
420a

Ranging response message
430a

# FIG. 4A

401

Controller

402

Controlee

Control message

~ 410b

Ranging initiation message

~ 420b

Ranging response message

~ 430b

# FIG. 4B

Ranging block

| Ranging round 0 | Ranging round 1 | Ranging round 2 | Ranging round 3 | . . . . . | Ranging round N-1 |
|---|---|---|---|---|---|

| Ranging slot 0 | Ranging slot 1 | Ranging slot 2 | . . . . . | Ranging slot M-1 |
|---|---|---|---|---|

FIG. 5

FIG. 6A

EP 4 642 145 A1

70b

60b

NB
Advertisement
Channel

UWB
Channel

# FIG. 6B

70c-1

60c-1

NB
Advertisement
Channel #1

UWB
Channel
#1

70c-2

60c-2

NB
Advertisement
Channel #2

UWB
Channel
#2

# FIG. 6C

70d-1

60d-1

NB
Advertisement
Channel #1

UWB
Channel
#1

70d-2

UWB
Channel
#2

FIG. 6D

FIG. 7

EP 4 642 145 A1

FIG. 8

FIG. 9

FIG. 10

FIG. 11

FIG. 12

FIG. 13

FIG. 14

FIG. 15

FIG. 16

EP 4 642 145 A1

FIG. 17

EP 4 642 145 A1

1810        1820        1830

| Transceiver | — | Controller | — | Storage unit |

# FIG. 18

1910        1920        1930

| Transceiver | — | Controller | — | Storage unit |

# FIG. 19

## INTERNATIONAL SEARCH REPORT

| International application No. |
| --- |
| **PCT/KR2024/000432** |

| A. | CLASSIFICATION OF SUBJECT MATTER |
| --- | --- |

**H04W 76/12**(2018.01)i; **H04B 1/7163**(2011.01)i; **H04W 8/00**(2009.01)i; **H04L 25/02**(2006.01)i; **H04W 4/80**(2018.01)i; **H04W 74/08**(2009.01)i; **H04W 52/02**(2009.01)i; **H04L 69/14**(2022.01)i

According to International Patent Classification (IPC) or to both national classification and IPC

| B. | FIELDS SEARCHED |
| --- | --- |

Minimum documentation searched (classification system followed by classification symbols)

H04W 76/12(2018.01); H04L 25/02(2006.01); H04W 12/06(2009.01); H04W 4/06(2009.01); H04W 4/80(2018.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 초광대역(UWB), 협대역(narrow band), 획득 패킷(acquisition packet), 압축된 조정 (compressed coordination)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>A | VERMA, Lochan et al. Follow-up on UWB Channel Usage Coordination. doc.: 15-22-0573-01-04ab. 14 November 2022.<br>See slides 4 and 8. | 1-3,7-9,13-14<br>4-6,10-12 |
| A | KR 10-2023-0000933 A (SAMSUNG ELECTRONICS CO., LTD.) 03 January 2023 (2023-01-03)<br>See paragraphs [0190]-[0314]; and figures 6a-14. | 1-14 |
| A | US 2022-0141657 A1 (APPLE INC.) 05 May 2022 (2022-05-05)<br>See claim 1. | 1-14 |
| A | KR 10-2022-0167164 A (SAMSUNG ELECTRONICS CO., LTD.) 20 December 2022 (2022-12-20)<br>See claim 1. | 1-14 |
| A | LIU, Yong et al. NBA-MMS-UWB ranging text proposal for 15.4ab TFD. IEEE P802.15-22-0381-00-004ab. 13 July 2022.<br>See pages 2-6. | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 April 2024** | **08 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000432**

| Patent document cited in search report | | | Publication date (day/month/year) | Patent family member(s) | | | Publication date (day/month/year) |
|---|---|---|---|---|---|---|---|
| KR | 10-2023-0000933 | A | 03 January 2023 | US | 2022-0416989 | A1 | 29 December 2022 |
| | | | | WO | 2022-270983 | A1 | 29 December 2022 |
| US | 2022-0141657 | A1 | 05 May 2022 | CN | 115706657 | A | 17 February 2023 |
| | | | | EP | 4130791 | A1 | 08 February 2023 |
| | | | | EP | 4131807 | A1 | 08 February 2023 |
| | | | | KR | 10-2023-0020928 | A | 13 February 2023 |
| | | | | US | 11729037 | B2 | 15 August 2023 |
| | | | | US | 11815616 | B2 | 14 November 2023 |
| | | | | US | 2022-0137177 | A1 | 05 May 2022 |
| | | | | US | 2022-0140971 | A1 | 05 May 2022 |
| | | | | US | 2022-0141076 | A1 | 05 May 2022 |
| KR | 10-2022-0167164 | A | 20 December 2022 | CN | 117461336 | A | 26 January 2024 |
| | | | | EP | 4315902 | A1 | 07 February 2024 |
| | | | | US | 2022-0397658 | A1 | 15 December 2022 |
| | | | | WO | 2022-260495 | A1 | 15 December 2022 |

Form PCT/ISA/210 (patent family annex) (July 2022)